(19) **Europäisches Patentamt / European Patent Office / Office européen des brevets**

(11) **EP 1 973 342 A2**

(12) # EUROPEAN PATENT APPLICATION

(43) Date of publication:
**24.09.2008 Bulletin 2008/39**

(51) Int Cl.:
***H04N 5/44*** (2006.01)

(21) Application number: **08152920.8**

(22) Date of filing: **18.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.03.2007 JP 2007073325**

(71) Applicant: **Sony Corporation**
**Tokyo 108-0075 (JP)**

(72) Inventors:
• **Kondo, Tetsujiro**
**Tokyo 108-0075 (JP)**
• **Yamamoto, Sakon**
**Tokyo 108-0075 (JP)**

(74) Representative: **Melzer, Wolfgang**
**Mitscherlich & Partner**
**Sonnenstrasse 33**
**80331 München (DE)**

(54) **Apparatus and method of processing image as well as apparatus and method of generating reproduction information**

(57)    An apparatus of processing an image based on an image signal relative to a video contains display-size-changing-and-deciding device that detects a motion vector of on object based on the image signal and decides a display size of the image based on the detected motion vector, and display-size-setting device that sets the display size of an image to be displayed to the display size decided by the display-size-changing-and-deciding device.

FIG. 1

EP 1 973 342 A2

**Description**

**CROSSREFERENCES TO RELATED APPLICATIONS**

The present invention contains subject matter related to Japanese Patent Application JP 2007-073325 filed in the Japanese Patent Office on March 20, 2007, the entire contents of which being incorporated herein by reference.

**BACKGROUND OF THE INVENTION**

**1. Field of the Invention**

The present invention relates to an apparatus and a method of processing an image and a program product of processing an image as well as an apparatus and a method of generating reproduction information and a program product of generating reproduction information, which is capable to apply to an apparatus and the like that process image and audio signals relative to image and audio information on video or the like such as a television broadcast program and movie.

**2. Description of Related Art**

The image display system for displaying the television broadcast program, the movie or the like has used a fixed image frame, in which an image is presented with its display size being conformed to the image frame. When image contents in the television broadcast program, the movie or the like are produced, a creator creates the contents on condition that the image can be displayed in such the fixed image frame.

In order to display an image enhancing its reality, a multiple-display system, a curved display, a wide-view display, a head mount display and the like have been recently developed. The multiple-display system and the like have expanded the image frame to display the wide-viewed image, thereby enabling its reality to be enhanced.

In association with such the image display system, Japanese Patent Application Publication No. H07-107412 has disclosed a television receiver in which predetermined amounts of deflection current are supplied based on plural kinds of display modes so that an image can be displayed on a wide screen up to the maximum allowed on either one or both of the horizontal direction and the vertical direction thereof.

Japanese Patent Application Publication No. 2006-217118 has disclosed a television apparatus in which by comparing a level of an audio signal with a set threshold value stored in a memory and determining whether or not the level exceeds the threshold value, a pulse width of a control pulse P varies so that an amount of deflection of electron beam can be made larger if the level exceeds the threshold value, thereby enlarging the image to be displayed.

**SUMMARY OF THE INVENTION**

The television receiver disclosed in Japanese Patent Application Publication No. H07-107412, however, displays the enlarged image regardless of scenes in the television broadcast program or the like. It is thus difficult to give a television viewer any excellent reality or impact.

Further, the television apparatus disclosed in Japanese Patent Application Publication No. 2006-217118 utilizes only an amount of sound when enlarging the image so that if there is no sound or if no amount of sound varies even when being capable of giving a television viewer any impact by enlarging the image in a scene, it is difficult to give a television viewer any impact and the like.

It is desirable to provide an apparatus and a method of processing an image and the like by which an image can be displayed with its display size being enlarged or reduced based on features of image and/or audio in a video and an image enabling any reality and/or impact to be given to the viewer can be presented.

According to an embodiment of the present invention, there is provided a first apparatus of processing an image based on an image signal relative to a video. This first apparatus contains display-size-changing-and-deciding device that detects a motion vector of an object based on the image signal and decides a display size of the image based on the detected motion vector, and display-size-setting device that sets the display size of an image to be displayed to the display size decided by the display-size-changing-and-deciding device.

By the first apparatus of processing the image according to an embodiment of the present invention, when processing an image based on an image signal relative to a video, the display-size-changing-and-deciding device detects the motion vector of the object based on the image signal and decides the display size of the image based on the detected motion vector. The display-size-setting device then sets the display size of the image to be displayed to the display size decided by the display-size-changing-and-deciding device. This enables the image to be displayed with its display size being enlarged or reduced based on a motion of the object in the video.

According to another embodiment of the present invention, there is provided a first method of processing an image based on an image signal relative to a video. The method contains a first step of detecting a motion vector of an object based on the image signal, a second step of deciding a display size of the image based on the motion vector detected in the first step, and a third step of setting the display size of an image to be displayed to the display size decided in the second step.

By the first method of processing an image according to the embodiment of the present invention, when processing the image based on the image signal relative to the video, it is possible to display the image with its display size being enlarged or reduced based on a motion of the object in the video.

According to further embodiment of the present invention, there is provided a first program product that allows a computer to process an image signal relative to a video by implementing the above first through third steps.

By the first program product according to the embodiment of the present invention, when processing an image based on an image signal relative to a video, it is possible to display the image with its display size being enlarged or reduced based on a motion of the object in the video.

In the above embodiments of the invention, when the computer processes an image based on an image signal relative to a video, a predetermined motion vector is extracted from the motion vectors of the objects based on the image signal, the display size of the image is decided based on the motion vector, and the display size of the image to be displayed is set to the decided display size. This enables the image to be displayed with its display size being enlarged or reduced based on a motion of an object in a video, thereby allowing the video having any reality and/or impact to be presented.

According to an embodiment of the present invention, there is provided a second apparatus of processing an image based on image and audio signals relative to image and audio information. The apparatus contains audio-information-detecting device that detects the audio information from the image and audio signals, audio-feature-value-extracting device that extracts a feature value of the predetermined audio from the audio information detected by the audio-information-detecting device, display-size-deciding device that decides a display size of an image in the image and audio signals based on the feature value of the audio extracted by the audio-feature-value-extracting device, and display-size-setting device that sets the display size of the image to be displayed to the display size decided by the display-size-deciding device.

By the second apparatus of processing the image according to this embodiment of the present invention, the audio-information-detecting device detects the audio information from the image and audio signals when processing an image based on the image and audio signals relative to the image and audio information. The audio-feature-value-extracting device then extracts a feature value of the predetermined audio from the audio information detected by the audio-information-detecting device. The display-size-deciding device further decides a display size of the image in the image and audio signals based on the feature value of the audio extracted by the audio-feature-value-extracting device. The display-size-setting device additionally sets the display size of the image to be displayed to the display size decided by the display-size-deciding device. This enables the image to be displayed with its display size being enlarged or reduced based on a feature value of the audio.

According to another embodiment of the present invention, there is provided a second method of processing an image based on image and audio signals relative to image and audio information on a video. The second method contains a first step of detecting the audio information from the image and audio signals, a second step of extracting a feature value of the predetermined audio from the audio information detected in the first step, a third step of deciding a display size of an image in the image and audio signals based on the feature value of the audio extracted in the second step, and a fourth step of setting the display size of an image to be displayed to the display size decided in the third step.

By the second method of processing the image according to the embodiment of the present invention, when processing the image based on the image and audio signals relative to the image and audio information, it is possible to display the image with its display size being enlarged or reduced based on a feature value of the audio.

According to further embodiment of the present invention, there is provided a second program product that allows a computer to process the image and audio signals relative to the image and audio information by implementing the above first through fourth steps.

By the second program product according to the embodiment of the present invention, when processing an image based on the image and audio signals relative to the image and audio information, it is possible to display the image with its display size being enlarged or reduced based on the feature value of the audio.

In these second apparatus, method, and program product according to the above embodiments of the invention, when processing the image based on the image and audio signals relative to the image and audio information, a feature value of the audio is extracted, the display size for display the image is decided in the image and audio signals based on the feature value of the audio, and the display size of the image to be displayed is set to the decided display size. This enables the image to be displayed with its display size being enlarged or reduced based on the feature value of the audio, thereby allowing an image having any reality and/or impact thereon to be presented.

According to an embodiment of the present invention, there is provided a third apparatus of processing an image based on image and audio signals relative to image and audio information on a video. The apparatus contains first display-size-changing-and-deciding device that detects a motion vector of on object based on the image information in the image and audio signals and decides a display size of the image based on the motion vector, second display-size-changing-and-deciding device that extracts a feature value of the predetermined audio from the audio information in the image and audio signals and decides a display size of the image in the image and audio signals based on the feature value of the audio, and display-size-setting device that sets the display size of the image to be displayed based on the display sizes decided by the first and second display-size-changing-and-deciding devices.

By the third apparatus of processing the image according to this embodiment of the present invention, the first display-size-changing-and-deciding device detects a motion vector of an object based on the image information in the image and audio signals and decides a display size of the image based on the motion vector when processing the image and audio signals on the video. The second display-size-changing-and-deciding device extracts a feature value of the predetermined audio from the audio information in the image and audio signals and decides a display size of the image in the image and audio signals based on the feature value of the audio. The display-size-setting device sets the display size of the image to be displayed based on the display sizes decided by the first and second display-size-changing-and-deciding devices. This enables the image to be displayed with its display size being enlarged or reduced based on movement of the object and the feature value of audio on the video.

According to another embodiment of the present invention, there is provided a third method of processing an image based on image and audio signals relative to image and audio information on a video. The method contains a first step of detecting a motion vector of on object based on the image information in the image and audio signals, a second step of decides a display size of the image based on the motion vector detected in the first step, a third step of extracting a feature value of the predetermined audio from the audio information on the image and audio signals, a fourth step of deciding a display size of the image in the image and audio signals based on the feature value of the audio extracted in the third step, and a fifth step of setting the display size of the image to be displayed based on the display sizes decided in the second and forth steps.

By the third method of processing the image according to the embodiment of the present invention, when processing the image based on the image and audio signals relative to the image and audio information on the video, it is possible to display the image with its display size being enlarged or reduced based on a movement of an image in the video and a feature value of the audio on the video.

According to further embodiment of the present invention, there is provided a third program product that allows a computer to process the image and audio signals relative to the image and audio information on the video by implementing the above first through fifth steps.

By the third program product according to the embodiment of the present invention, when the computer processes an image based on the image and audio signals relative to the image and audio information on the video, it is possible to display the image with its display size being enlarged or reduced based on the movement of the image in the video and the feature value of the audio on the video.

In these third apparatus, method, and program product according to the above embodiments of the invention, when processing the image based on the image and audio signals relative to the image and audio information on the video, a display size of the image to be displayed is decided based on the motion vector, a display size of the image to be displayed is decided in the image and audio signals based on the feature value of the audio, and a display size of the image to be displayed is set based on any two decided display sizes. This enables the image to be displayed with its display size being enlarged or reduced based on the movement of the image in the video and the feature value of the audio on the video, thereby allowing a video having any reality and/or impact to be presented.

According to an embodiment of the present invention, there is provided a first apparatus of generating reproduction information for reproducing an image signal on a video. The apparatus contains motion-vector-detecting device that detects motion vectors of objects from the image signal, motion-vector-extracting device that extracts a predetermined motion vector from the motion vectors detected by the motion-vector-detecting device, and display-size-deciding device that decides the display size of the image to be displayed based on the motion vector extracted by the motion-vector-extracting device and generates the reproduction information for setting the display size of the image to be displayed based on the decided display size.

By the first apparatus of generating reproduction information according to an embodiment of the invention, when generating the reproduction information for reproducing the image signal on a video, the motion-vector-detecting device detects motion vectors of objects from the image signal. The motion-vector-extracting device extracts a predetermined vector from the motion vectors detected by the motion-vector-detecting device. The display-size-deciding device decides the display size of the image to be displayed based on the motion vector extracted by the motion-vector-extracting device and generates the reproduction information for setting the display size of the image to be displayed. This enables the image to be displayed with its display size being enlarged or reduced by reproducing the image based on the generated reproduction information.

According to another embodiment of the present invention, there is provided a first step of detecting motion vectors of objects from the image signal, a second step of extracting a predetermined motion vector from the motion vectors detected in the first step, a third step of deciding the display size of the image to be displayed based on the motion vector extracted in the second step, and a fourth step of generating the reproduction information for setting the display size of the image to be displayed based on the display size decided in the third step.

By the first method of generating the reproduction information according to the embodiment of the present invention, when generating the reproduction information for reproducing the image signal on the video, it is possible to generate the reproduction information for displaying the image with its display size being enlarged or reduced based on movement of the object in the video.

According to further embodiment of the present invention, there is provided a first program product that allows a computer to generate the image signal on the video by implementing the above first through fourth steps.

By the first program product according to the embodiment of the present invention, when the computer generates the reproduction information for reproducing the image signal based on the video, it is possible to generate the reproduction information for displaying the image with its display size being enlarged or reduced based on the movement of the image in the video.

In these first apparatus, method, and program product according to the above embodiments of the invention, when generating the reproduction information for reproducing the image signal on the video, the display size of the image to be displayed is decided based on the motion vector of the object in the video, and the reproduction information for setting the display size of the image to be displayed is generated based on the display size thereof. This enables the reproduction information for displaying the image to be generated with its display size being enlarged or reduced based on the movement of the object in the video, thereby allowing a video having any reality and/or impact thereon to be presented when reproducing the image based on the generated reproduction information.

According to an embodiment of the present invention, there is provided a second apparatus of generating reproduction information for reproducing an image signal. The apparatus contains audio-information-detecting device that detects the audio information from the image and audio signals, audio-feature-value-extracting device that extracts a feature value of the predetermined audio from the audio information detected by the audio-information-detecting device, and display-size-deciding device that decides a display size of the image in the image and audio signals based on the feature value of the audio extracted by the audio-feature-value-extracting device and generates the reproduction information for setting the display size of the image to be displayed.

By the second apparatus of generating reproduction information according to an embodiment of the invention, when generating the reproduction information for reproducing the image and audio signals relative to the image and audio information, the audio-information-detecting device detects the audio information from the image and audio signals. The audio-feature-value-extracting device then extracts a feature value of the predetermined audio from the audio information detected by the audio-information-detecting device. The display-size-deciding device decides a display size of the image in the image and audio signals based on the feature value of the audio extracted by the audio-feature-value-extracting device and generates the reproduction information for setting the display size of the image to be displayed. This enables the image to be displayed with its display size being enlarged or reduced based on the feature value of the audio by reproducing the image based on the generated reproduction information.

According to another embodiment of the present invention, there is provided a second method of generating reproduction information for reproducing image and audio signals relative to image and audio information. The method contains a first step of detecting the audio information from the image and audio signals, a second step of extracting a feature value of the predetermined audio from the audio information detected in the first step, a third step of deciding a display size of the image in the image and audio signals based on the feature value of the audio extracted in the second step, and a fourth step of generating the reproduction information for setting the display size of the image to be displayed based on the display size decided in the third step.

By the second method of generating the reproduction information according to the embodiment of the present invention, when generating the reproduction information for reproducing the image and audio signals relative to the image and audio information, it is possible to generate the reproduction information for displaying the image with its display size being enlarged or reduced based on a feature value of the audio.

According to further embodiment of the present invention, there is provided a second program product that allows a computer to generate the image and audio signals relative to image and audio information on a video by implementing the above first through fourth steps.

By the above second program product according to the embodiment of the present invention, when the computer generates the reproduction information for reproducing the image and audio signals relative to the image and audio information, it is possible to generate the reproduction information for displaying the image with its display size being enlarged or reduced based on the feature value of the audio.

In these second apparatus, method, and program product according to the above embodiments of the invention, when generating the reproduction information for reproducing the image and audio signals relative to the image and audio information, the display size of the image is decided based on the feature value of the audio, and the reproduction information for setting the display size of the image to be displayed is generated based on the decided display size. This enables the reproduction information for displaying the image with its display size being enlarged or reduced based on the feature value of the audio, thereby allowing the image to be displayed with its display size being enlarged or reduced by reproducing the image based on the generated reproduction information to present the image having any reality and/or impact.

According to an embodiment of the present invention, there is provided a third apparatus of generating reproduction information for reproducing image and audio signals relative to image and audio information on a video. The apparatus contains first display-size-changing-and-detecting device that detects a motion vector of an object based on the image information in the image and audio signals and decides a display size of the image based on the motion vector, decides the display size of the image based on the motion vector, and generates reproduction information for setting a display size of an image to be displayed, and second display-size-changing-and-detecting device that extracts a feature value of the predetermined audio from the audio information from the image and audio signals, decides a display size of the image in the image and audio signals based on the feature value of the audio, and generates reproduction information for setting a display size of an image to be displayed.

By the third apparatus of generating the reproduction information according to the embodiment of the invention, when processing the image and audio signals relative to the image and audio information on the video, the first display-size-changing-and-detecting device detects a motion vector of an object based on the image information in the image and audio signals, decides a display size of the image based on the motion vector, and generates reproduction information for setting a display size of an image to be displayed. The second display-size-changing-and-detecting device extracts a feature value of predetermined audio from the audio information in the image and audio signals, decides a display size of the image in the image and audio signals based on the feature value of the audio, and generates reproduction information for setting a display size of the image to be displayed. This enables the image to be displayed with its display size being enlarged or reduced by reproducing the image based on the generated reproduction information.

According to another embodiment of the present invention, there is provided a third method of generating reproduction information for reproducing image and audio signals relative to image and audio information on a video. The method contains a first step of detecting a motion vector of an object based on the image information in the image and audio signals, a second step of deciding a display size of the image based on the motion vector detected in the first step, a third step of generating the reproduction information for setting a display size of an image to be displayed to the display size decided in the second step, a fourth step of extracting a feature value of predetermined audio from the audio information in the image and audio signals, a fifth step of deciding a display size of an image to be displayed in the image and audio signals based on the feature value of the audio extracted in the fourth step, and a sixth step of generating the reproduction information for setting a display size of an image to the display size decided in the fifth step.

By the third method of generating the reproduction information according to the embodiment of the present invention, when generating the reproduction information for reproducing the image and audio signals relative to the image and audio information on the video, it is possible to generate the reproduction information for displaying the image with its display size being enlarged or reduced based on a movement of the object in the video and a feature value of the audio in the video.

According to further embodiment of the present invention, there is provided a third program product that allows a computer to generate image and audio signals relative to image and audio information on a video by implementing the above first through sixth steps.

By the third program product according to the embodiment of the present invention, when the computer generates the reproduction information for reproducing the image and audio signals relative to the image and audio information based on the video, it is possible to generate the reproduction information for displaying the image with its display size being enlarged or reduced based on a movement of the image in the video and a feature value of the audio in the video.

In these third apparatus, method, and program product according to the above embodiments of the invention, when generating the reproduction information for reproducing the image and audio signals relative to the image and audio information based on the video, the display size of the image is decided based on the motion vector and the reproduction information for setting the display size of the image to be displayed is generated as well as the display size of the image is also decided based on the feature value of the audio and the reproduction information for setting the display size of the image to be displayed is generated. This enables to be generated the reproduction information for displaying the image with its display size being enlarged or reduced based on a movement of the image in the video and a feature value of the audio in the video, thereby allowing a video having any reality and/or impact thereon to be presented.

The concluding portion of this specification particularly points out and directly claims the subject matter of the present invention. However, those skilled in the art will best understand both the organization and method of operation of the invention, together with further advantages and objects thereof, by reading the remaining portions of the specification in view of the accompanying drawing(s) wherein like reference characters refer to like elements.

**BRIEF DESCRIPTION OF THE DRAWINGS**

FIG. 1 is a schematic diagram for showing a configuration of an image-display system to which an embodiment according to the invention is applicable;

FIG. 2A is a diagram for showing contents in a frame F(1) and an image when the frame F(1) is displayed on screens, FIG. 2B is a diagram for showing contents in a frame F(2) and an image when the frame F(2) is displayed on the screens, FIG. 2C is a diagram for showing contents in a frame F(3) and an image when the frame F(3) is displayed on the screens, FIG. 2D is a diagram for showing contents in a frame F(4) and an image when the frame F(4) is displayed on the screens;

FIG. 3 is a block diagram for showing a configuration of an embodiment of an apparatus of processing an image according to the invention;

FIG. 4 is a block diagram for showing a configuration of a scene-change-detecting unit;

FIG. 5 is a diagram for illustrating a thinning process of pixels;

FIG. 6 is a block diagram for showing another configuration of the scene-change-detecting unit;

FIG. 7 is a block diagram for showing a configuration of a size-changing-and-deciding unit;

FIG. 8 is a graphical representation for showing a histogram of motion vector;

FIG. 9 is a flowchart for showing an example of display size setting;

FIG. 10A is a graph for showing a control example on a zoom ratio when a display size enlarges and FIG. 10B is a graph for showing a control example on a zoom ratio when a display size reduces;

FIG. 11 is a diagram for illustrating a generation example of an enlarged display image;

FIG. 12 is a diagram for illustrating a generation example of a reduced display image;

FIG. 13A is a graph for showing a control example on a zoom ratio when a display size smoothly enlarges and FIG. 13B is a graph for showing a control example on a zoom ratio when a display size smoothly reduces;

FIG. 14 is a block diagram for showing another configuration of the size-changing-and-deciding unit;

FIG. 15 is a block diagram for showing further configuration of the size-changing-and-deciding unit;

FIG. 16 is a block diagram for showing a configuration of another embodiment of the apparatus of processing an image according to the invention when performing processing in an off-line mode;

FIG. 17A is a graph for showing an example before adjustment of display size for each scene supplied to a storage device and FIG. 17B is a graph for showing an adjusted example of display size for each scene supplied to a storage device;

FIG. 18A is a graph for showing an example before adjustment of display size for each frame supplied to a storage device and FIG. 18B is a graph for showing an adjusted example of display size for each frame supplied to the storage device;

FIG. 19 is a diagram for showing a configuration of an embodiment of a computer to which an embodiment according to the invention is applicable;

FIG. 20 is a flowchart for showing a whole configuration of an image-processing program in a case of real time process;

FIG. 21 is a flowchart for showing operation of scene distinction;

FIG. 22 is a flowchart for showing an operation of size change and decision;

FIG. 23 is a flowchart for showing another operation of the size change and decision;

FIG. 24 is a flowchart for showing further operation of the size change and decision;

FIG. 25 is a flowchart for showing a whole configuration of an image-processing program in a case of performing processing in an off-line mode;

FIG. 26 is a flowchart for showing an operation in an embodiment of an apparatus of processing an image according to the invention when changing a display size of the image to be displayed with coinciding a timing of scene change;

FIG. 27 is a flowchart for showing an operation of an embodiment of an apparatus of processing an image according to the invention when adjusting a display size of the image to be displayed so that a variation in terms of time on the display size of the image to be displayed can decrease;

FIG. 28 is a block diagram for showing a configuration of an embodiment of an apparatus of generating reproduction information according to the invention;

FIG. 29 is a block diagram for showing a configuration of information-reproducing apparatus; and

FIG. 30 is a flowchart for showing a whole configuration of a reproduction-information-generating program.

**DESCRIPTION OF THE PREFERRED EMBODIMENTS**

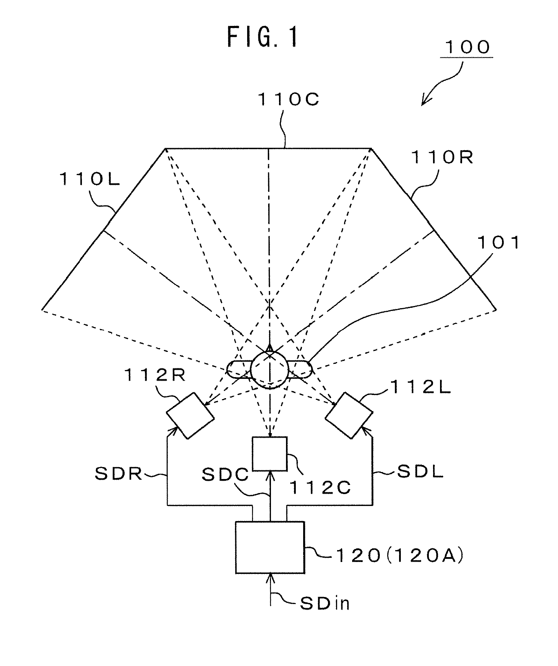

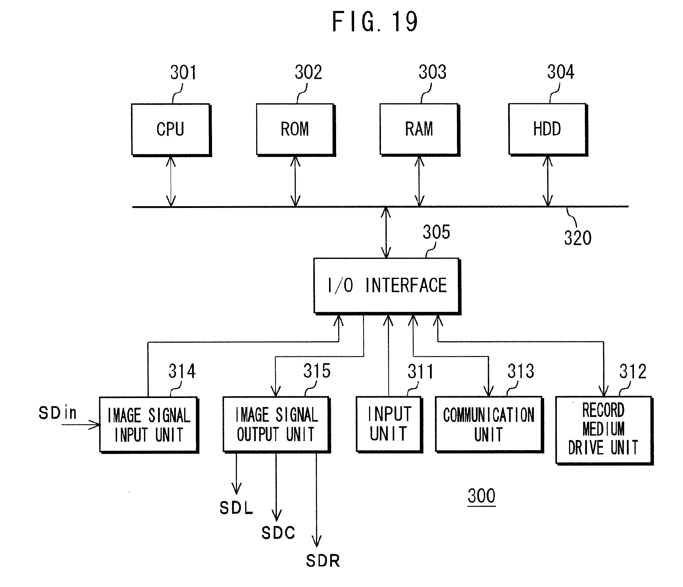

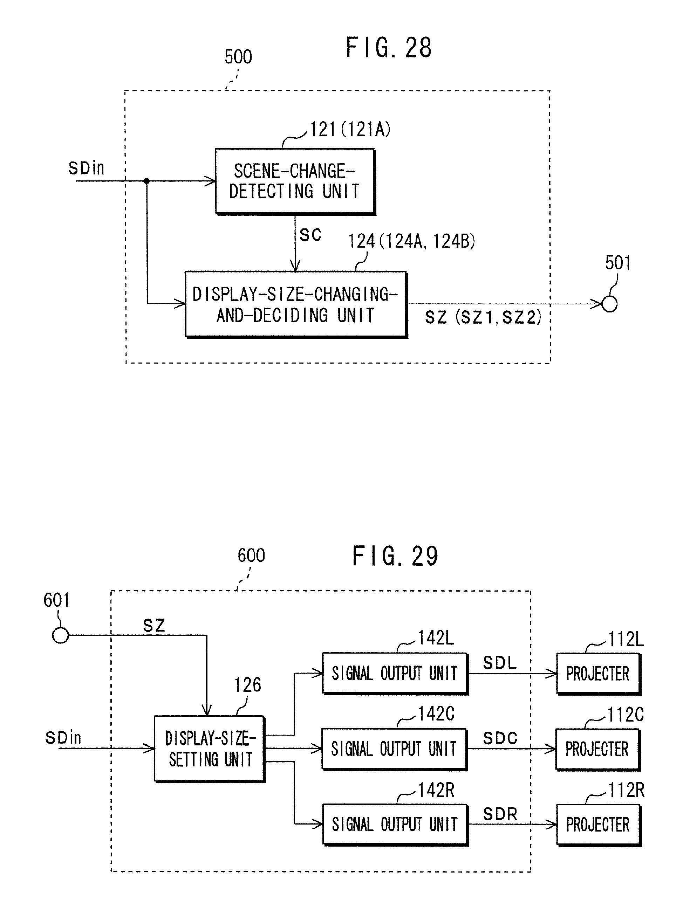

The following will describe embodiments of the present invention with reference to the accompanied drawings. Particularly, the following will describe embodiments of an apparatus and a method of processing an image according to the present invention with reference to FIGS. 1 through 18. The following will describe embodiments of a program product of processing an image according to the present invention with reference to FIGS. 19 through 27. The following will describe embodiments of an apparatus and a method of generating reproduction information and a program product of generating reproduction information according to the invention with reference to FIGS. 28 through 30.

FIG. 1 shows a configuration of an image-display system 100 to which an embodiment of an apparatus of processing an image according to the invention is applicable. The image-display system 100 contains three screens 110L, 110C, and 110R, which are arranged on a front and both sides of a user 101 and constitutes one image display area as a whole. Projectors 112L, 112C, and 112R are provided respectively corresponding to the screens 110L, 110C, and 110R. The projectors 112L, 112c, and 112R are connected to an apparatus 120 of processing an image. The projector 112L projects an image on the screen 110L based on an output signal SDL received from the apparatus 120 of processing the image. Similarly, the projectors 112C and 112R respectively project images on the screens 110C and 110R based on output signals SDC and SDR received from the apparatus 120 of processing the image.

The apparatus 120 of processing the image receives an input image signal SDin relative to image and audio signals on a video and processes the input image signal SDin. The apparatus 120 of processing the image also extracts a movement of object in a screen and/or a feature value of audio based on the input image signal SDin. The apparatus 120 of processing the image then compares the extracted movement and/or feature value with a predetermined value and changes a display size of an image to be displayed if it satisfies any condition.

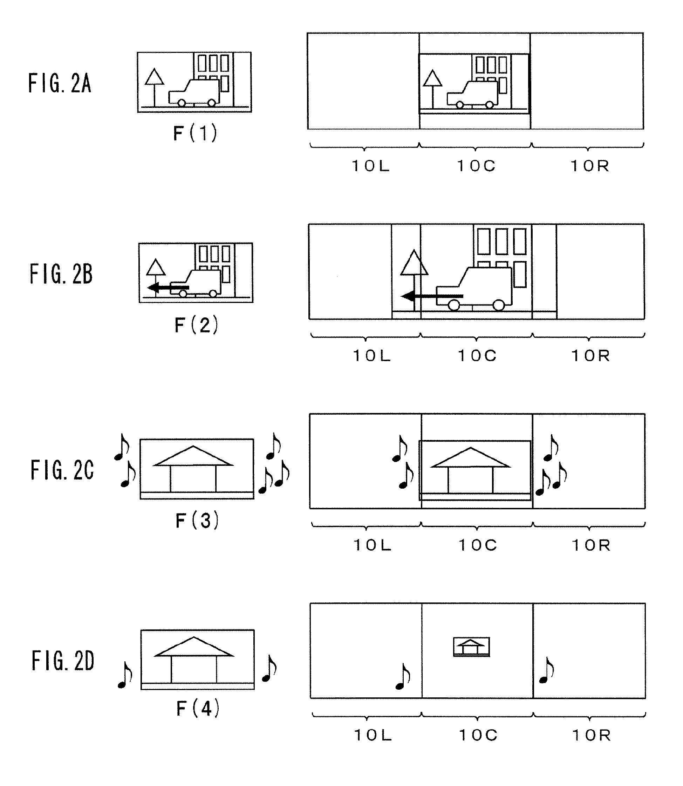

FIGS. 2A through 2D, respectively, show examples of an image display in the image-display system 100. It is supposed that each screen has a 4:3 aspect ratio and a $720 \times 480$ pixel screen resolution but an input image has a 16: 9 aspect ratio or any aspect ratio for a wide image used in a movie and the like and is a $720 \times 270$ pixel image on the screen.

FIG. 2A shows an image in a frame F(1) and an image when the frame F(1) is displayed on the screens 110L, 110C and 110R. FIG. 2B shows an image in a frame F(2) and an image when the frame F(2) is displayed on the screens 110L, 110C and 110R. FIG. 2C shows an image in a frame F(3) and an image when the frame F(3) is displayed on the screens 110L, 110C and 110R. FIG. 2D shows an image in a frame F(4) and an image when the frame F(4) is displayed on the screens 110L, 110C and 110R.

The apparatus 120 of processing the image changes a display size of the image to be displayed on the screens 110L, 110C and 110R based on a movement of an object in the input image and/or a feature value of the audio if it satisfies any condition.

For example, when the frame F (1) shown in FIG. 2A is moved to the frame F(2) shown in FIG. 2B and a sudden change occurs in movement of an object in the image, for example, a car suddenly moves in a direction along an arrow shown in FIG. 2B, the apparatus 120 of processing the image enlarges the image so as to be displayed on the screens 110L, 110C and 110R as shown in FIG. 2B starting from the image relative to the frame F(1) displayed on the screen 110C as shown in FIG. 2A. It is to be noted that in this moment, even if the image to be displayed enlarges, the apparatus 120 of processing the image is controlled so that no area in which the enlarged image is displayed can exceed any of the screens.

When the frame F(3) shown in FIG. 2C is moved to the frame F(4) shown in FIG. 2D and an amount of sound decreases, the apparatus 120 of processing the image reduces the image so as to be displayed on the screen 110C as shown in FIG. 2D starting from the image relative to the frame F(3) displayed on the screen 110C as shown in FIG. 2C.

When the display size of the image to be displayed changes based on the movement of the object in the image or a feature value of the audio as described above, the apparatus 120 of processing the image shown in FIG. 1 changes the image to be displayed in a real time process or an off-line process. In a case of the real time process, the apparatus 120 of processing the image detects the movement of the object in the image or extracts a feature value of the audio from the audio signal based on the input image signal SDin on the video. The apparatus 120 of processing the image also detects a scene change and keeps changing the display size of the image to be displayed until the scene changes. The apparatus 120 of processing the image then generates and outputs the output signals SDL, SDC, and SDR to display the size-changed image on the screen(s).

In a case of performing processing in an off-line mode, the apparatus 120 of processing the image reads the input image signal SDin out of the storage medium and detects a scene change therefrom. The apparatus 120 of processing the image detects the movement of the object in the image or extracts a feature value of the audio from the audio signal for each scene detected by the scene change detection and decides a display size of the image for each scene. The apparatus 120 of processing the image then changes the display size of the image to be displayed at a predetermined timing correlating with the scene change.

In order to display the image, the apparatus 120 of processing the image then reads the input image signal SDin on a video and any information on the display size out thereof and generates and outputs the output signals SDL, SDC, and SDR to display the input image based on the input image signal SDin and the display size thus read out.

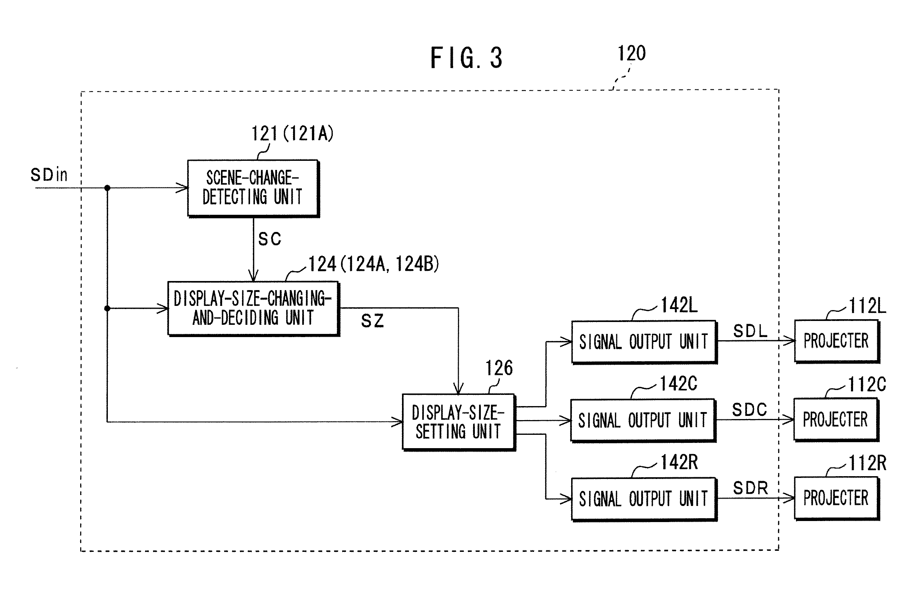

FIG. 3 shows a configuration of an embodiment of the apparatus 120 of processing an image according to the invention in a case of the real time process. A scene-change-detecting unit 121, a display-size-changing-and-deciding unit 124, and a display-size-setting unit 126 respectively receive the input image signal SDin on the video.

The scene-change-detecting unit 121 detects a scene change, i.e., a position of discontinuity in images, namely, a joint portion between a consecutive scene and a scene that is different from the consecutive scene, based on the input image signal SDin.

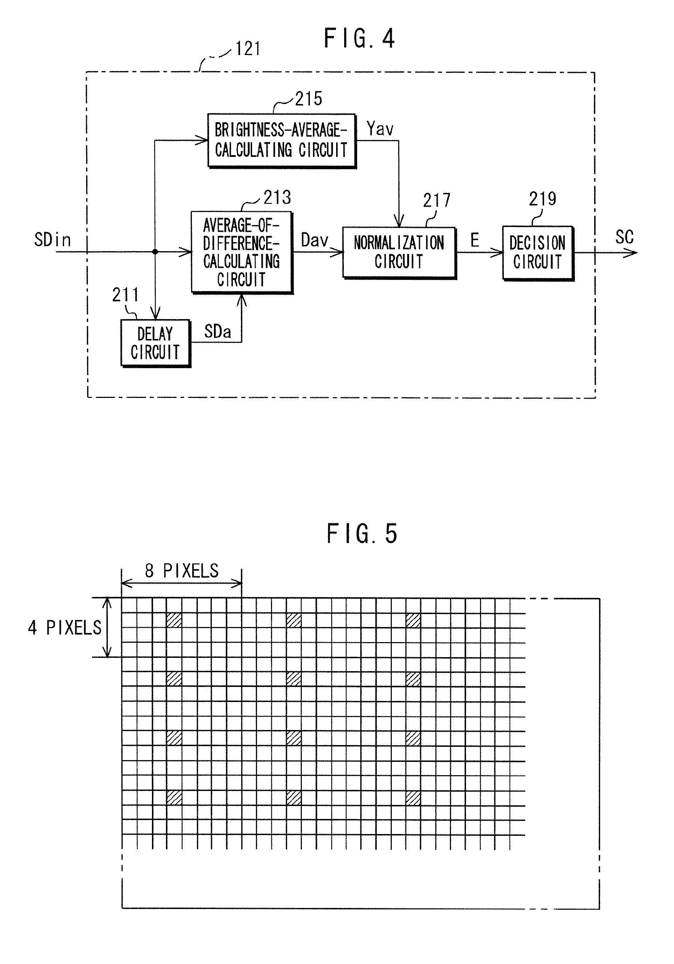

FIG. 4 shows a configuration of the scene-change-detecting unit 121 that detects a scene-change by utilizing an image signal of two frames.

A delay circuit 211 in the scene-change-detecting unit 121 receives the input image signal SDin, delays the input image signal SDin by one frame, and supplies it to an average-of-difference-calculating circuit 213 as a delayed image signal SDa. The average-of-difference-calculating circuit 213 receives the input image signal SDin and the delayed image signal SDa, calculates an average value Dav of differences between the two frames based on the input image signal SDin and the delayed image signal SDa, and supplies the average value Dav to a normalization circuit 217. The differences in brightness level between the two frames on respective pixels are calculated and an average value of the obtained differences is also calculated as the average value Dav of differences, which is supplied to the normalization circuit 217. The average value Dav of differences can be calculated according to the following expression (1):

$$Dav = \frac{\sum_{i=1}^{N} | YCi - YPi |}{N} \quad ...(1)$$

where N is numbers of pixels in an image of one frame, YC is a brightness level of a pixel based on the input image signal SDin, and YP is a brightness level of the pixel based on the delayed image signal SDa.

The average value Dav of differences varies greatly according to the brightness level in the image. For example, in a case of displaying the image in light tones, the average value Dav of differences increases only by changing a part of the image to dark one even if no scene changes. In a case of displaying the image in dark tones, the average value Dav of differences does not increase because of small change in the brightness level even if a scene changes. Thus, the scene-change-detecting unit 121 contains the normalization circuit 217 which normalizes the average value Dav of differences according to brightness in the image so that a correct scene change can be detected by receiving any less influence by the brightness in the image.

A brightness-average-calculating circuit 215 in the scene-change-detecting unit 121 calculates an average value of the brightness levels in one frame based on the brightness level of each pixel from the input image signal SDin. The brightness-average-calculating circuit 215 then supplies the calculated average value to the normalization circuit 217 as a brightness average value Yav. The brightness average value Yav can be calculated according to the following expression (2):

$$Yav = \frac{\sum_{i=1}^{N} YCi}{N} \quad ...(2)$$

where N is numbers of pixels in an image of one frame and YC is a brightness level of a pixel based on the input image signal SDin.

The normalization circuit 217 normalizes the average value Dav of differences. Namely, the normalization circuit 217 generate a normalized value E of the average value of differences (hereinafter referred to as "normalized value E") by correcting the average value Dav of differences for the brightness average value Yav indicating the brightness in the image according to the following expression (3) :

$$E = \frac{Dav}{Yav} \quad ...(3)$$

The normalization circuit 217 then supplies the normalized value E to a decision circuit 219 in the scene-change-detecting unit 121. The decision circuit 219 receives the normalized value E and compares the normalized value E with a threshold value Lr, which has previously been determined therein, and decides that a scene changes if the normalized value E exceeds the threshold value Lr. The decision circuit 219, however, decides that any scene does not change if the normalized value E does not exceed the threshold value Lr. The decision circuit 219 then generates a scene change detection signal SC indicating a result of this decision and supplies the scene change detection signal SC to the display-size-changing-and-deciding unit 124 shown in FIG. 3.

Thus, the normalization circuit 217 has normalized the average value Dav of differences according to brightness in the image and the decision circuit 219 has decided whether the scene changes or not by using the normalized value E, so that the correct scene change can be detected by receiving any less influence by the brightness in the image.

Although, in the above-mentioned scene-change-detecting unit 121, the scene change has been detected using the signal on all pixels within one frame, it may take a lot of time to perform any calculation processing thereon if calculating the average value Dav of differences and the brightness average value Yav using the signal on all pixels. If such the calculation performs at high speed in order to save a period of time for calculation, a cost therefor may increase.

A thinning process on pixels thus performs. For example, as shown in FIG. 5, an image of one frame is classified into regions each of 8x4 pixels and diagonally shaded one pixel is selected from each region. Using the signal on the selected pixels then enables the average value Dav of differences and the brightness average value Yav to be calculated. Such the thinning process enables an amount of calculation to be reduced, thereby making the calculation processing easy and avoiding any rapid calculation to prevent the cost for the calculation processing from being increased.

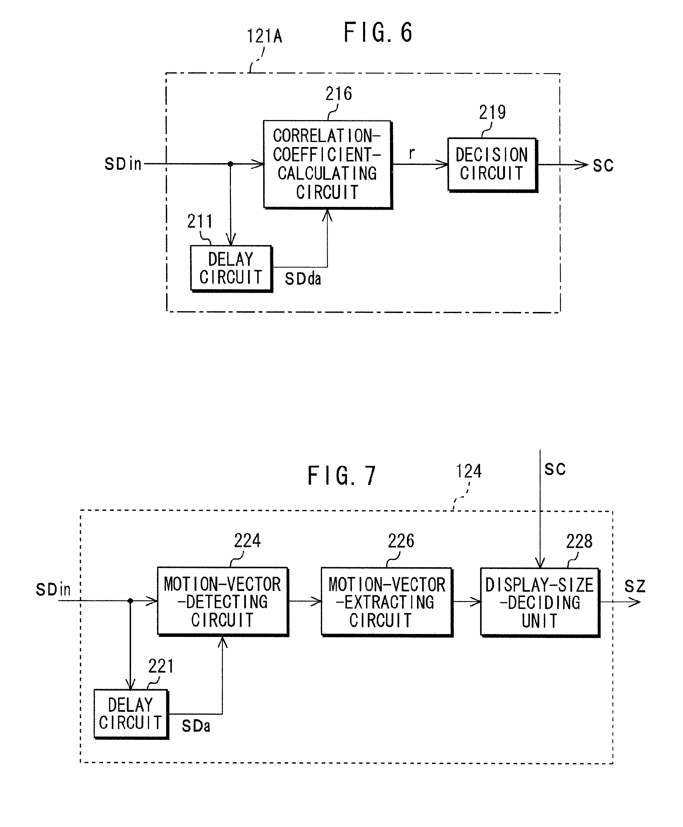

Although, in the above-mentioned scene-change-detecting unit 121, the scene change has been detected using the normalized value E, it is desirable to obtain a correlation coefficient r between images of two frames and compare the correlation coefficient r with a threshold value, thereby enabling a scene change to be accurately detected. FIG. 6 shows a configuration of a scene-change-detecting unit 121A using the correlation coefficient r.

A delay circuit 211 in the scene-change-detecting unit 121A receives the input image signal SDin, delays the input image signal SDin by one frame, and supplies it to a correlation-coefficient-calculating circuit 216 as a delayed image signal SDda. The correlation-coefficient-calculating circuit 216 receives the input image signal SDin and the delayed image signal SDda and calculates the correlation coefficient r based on the input image signal SDin and the delayed image signal SDda.

The correlation coefficient r can be calculated according to the following expression (4):

$$r = \frac{\sum_{i=1}^{N}(YFi - YFav)(YSi - YSav)}{\sqrt{\sum_{i=1}^{N}(YFi - YFav)^2}\sqrt{\sum_{i=1}^{N}(YSi - YSav)^2}} \qquad \ldots(4)$$

where N is numbers of pixels in an image of one frame, YF is a brightness level of a pixel based on the image signal of a first frame, YS is a brightness level of a pixel based on the image signal of a next frame, YFav is an average of brightness levels of pixels based on the image signal of the first frame, and YSav is an average of brightness levels of pixels based on the image signal of the next frame.

The correlation-coefficient-calculating circuit 216 supplies the calculated correlation coefficient r to a decision circuit 219 in the scene-change-detecting unit 121A.

The decision circuit 219 receives the correlation coefficient r, compares the correlation coefficient r with a threshold value Lr, which has previously been determined therein, and decides that a scene changes if the correlation coefficient r does not exceed the threshold value Lr. The decision circuit 219, however, decides that any scene does not change, i.e., the scene is a consecutive scene if the correlation coefficient r exceeds the threshold value Lr. The decision circuit 219 then generates a scene change detection signal SC indicating a result of this decision and supplies the scene change detection signal SC to the display-size-changing-and-deciding unit 124 shown in FIG. 3.

FIG. 7 shows a configuration of the display-size-changing-and-deciding unit 124. The display-size-changing-and-deciding unit 124 detects a motion vector of an object in the image based on the image information in the input image signal SDin and decides a display size of an image based on the motion vector.

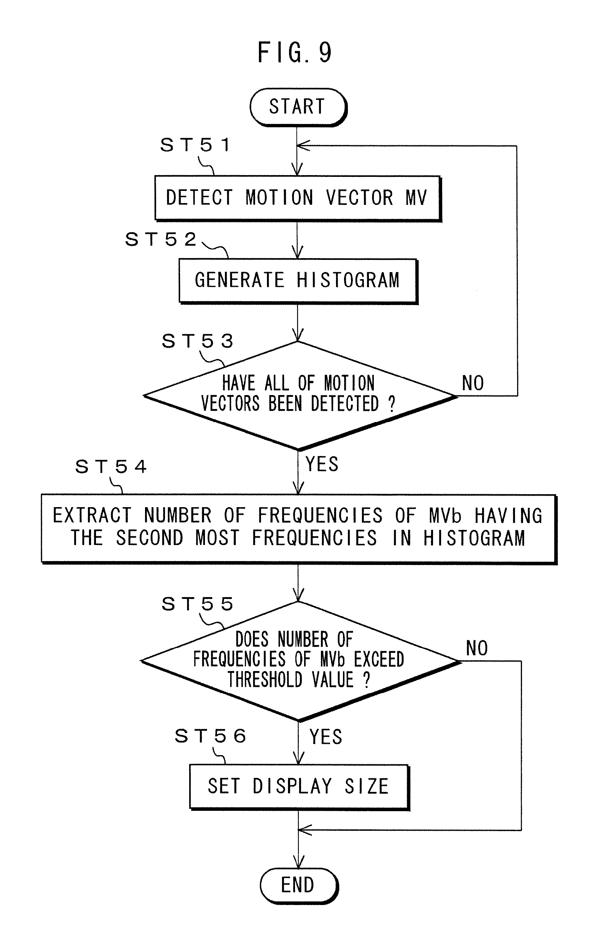

In this case, a delay circuit 221 in the display-size-changing-and-deciding unit 124 receives the input image signal SDin and delays the input image signal SDin by one frame to generate an image signal SDa. The delay circuit 221 supplies the delayed image signal SDa to a motion-vector-detecting circuit 224 in the display-size-changing-and-deciding unit 124. The motion-vector-detecting circuit 224 receives the input image signal SDin and the delayed image signal SDa. The motion-vector-detecting circuit 224 then detects motion vectors MV from the input image signal SDin and the delayed image signal SDa (at step ST51 shown in FIG.9). In order to detect the motion vectors MV, for example, the image of the input image signal SDin is classified into blocks each of 8x8 pixels and a position in a desired search area of the image of the delayed image signal SDa so that a sum of absolute values of differences becomes minimum is detected as the motion vector MV. The motion-vector-detecting circuit 224 then supplies the detected motion vectors MV to a motion-vector-extracting circuit 226 in the display-size-changing-and-deciding unit 124.

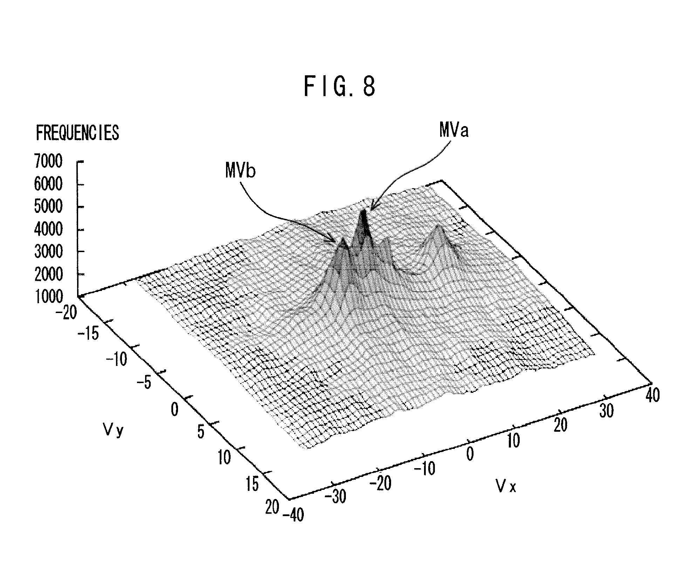

The motion-vector-extracting circuit 226 receives the motion vectors MV from the motion-vector-detecting circuit 224 and extracts a predetermined motion vector from the received motion vectors MV. For example, as shown in FIG. 8, the motion-vector-extracting circuit 226 generates histogram of all of the received motion vectors MV (at step ST52 shown in FIG.9), defines the motion vector MVa having the most frequencies in the histogram of the image as motion vector of a background and defines the motion vector MVb having the second most frequencies on the histogram of the image as motion vectors of a major object.

It is determined whether or not all of the motion vectors have been detected. If all of the motion vectors have not yet been detected at step ST53 shown in FIG. 9, the process goes back to the step ST 51. If all of the motion vectors have been detected at step ST53 shown in FIG. 9, the process goes to step ST 54 shown in FIG. 9 where the motion-vector-extracting circuit 226 also extracts number of the frequencies of the motion vector MVb having the second most frequencies in the histogram and supplies the number of the frequencies of the motion vector MVb having the second most frequencies in the histogram to a display-size-deciding unit 228 in the display-size-changing-and-deciding unit 124. In this moment, if the motion vector MVa having the most frequencies in histogram of the image are almost same in number as the motion vector MVb having the second most frequencies in the histogram of the image, the motion-vector-extracting circuit 226 can define the motion vector having the third most frequencies in the histogram of the image as the motion vectors of the major object.

The display-size-deciding unit 228 decides a display size of an image based on the motion vector extracted from the motion-vector-extracting circuit 226. For example, if the motion-vector-extracting circuit 226 extracts the motion vector MVb having the second most frequencies in the histogram, the display-size-deciding unit 228 compares the number of the frequencies of the motion vector MVb having the second most frequencies in the histogram with a predetermined threshold value at step ST55 shown in FIG. 9. If the number of the frequencies of the motion vector MVb having the second most frequencies in the histogram exceeds the predetermined threshold value, the display-size-deciding unit 228 decides that the major object having a certain extent occupied space moves and decides enlargement of the display size to generate display size information SZ at step ST 56 shown in FIG. 9. If the number of the frequencies of the motion vector MVb having the second most frequencies in the histogram does not exceed the predetermined threshold value, the display-size-deciding unit 228 decides maintenance of the display size to generate the display size information SZ at the step ST 56 shown in FIG. 9.

The display-size-setting unit 126 shown in FIG. 3 sets a display size of an image to be displayed based on the display size information SZ generated in the display-size-deciding unit 228. This enables the image to be displayed with its display size being enlarged or reduced based on a motion of the object in the video, thereby allowing a video having any reality and/or impact to be presented.

It is to be noted that although the motion-vector-extracting circuit 226 shown in FIG. 7 has extracted the motion vectors relative to the second most histograms, this invention is not limited to this. The motion-vector-extracting circuit 226 can perform other various kinds of extractions at the same time. For example, the motion-vector-extracting circuit 226 can extract a direction of the motion vectors relative to the most histograms. The display-size-deciding unit 228 then compares the direction of the motion vectors relative to the most histograms with a threshold value. If the direction of the motion vectors relative to the most histograms exceeds the threshold value, the display-size-deciding unit 228 decides that in the scene, objects move differently and decides enlargement of the display size of the image to be displayed to generate the display size information SZ.

Alternatively, the motion-vector-extracting circuit 226 can calculate an absolute value of differences between the motion vectors of one frame before a current frame and the motion vectors of the current frame and extracts number of the absolute values of differences that exceeds a threshold value. The display-size-deciding unit 228 then compares the number of the absolute values of differences with a threshold value. If the number of the absolute values of differences thus extracted exceeds the threshold value, the display-size-deciding unit 228 decides that movement changes and decides enlargement of the display size of the image to be displayed to generate the display size information SZ.

If the number of the absolute values of differences then does not exceed the threshold value, the display-size-deciding unit 228 may decide return of the display size of the image to be displayed to its display size before the enlargement to generate the display size information SZ.

Further, a user can set information on the motion vectors to be extracted in the motion-vector-extracting circuit 226 and operations of the display-size-deciding unit 228 in advance. In such a case, processing may be performed according to the information on the motion vectors and the display operations that the user has set. For example, if the user sets so that a scene in which there is nothing to move can be enlarged and displayed, the motion-vector-extracting circuit 226 extracts number of blocks, in each of which a motion vector is (0, 0). The display-size-deciding unit 228 then compares the number of the blocks thus extracted with a threshold value. If the number of the blocks thus extracted exceeds the threshold value, the display-size-deciding unit 228 decides that it is a scene in which there is nothing to move and decides enlargement of the display size of the image to be displayed to generate the display size information SZ.

Further, if the display-size-deciding unit 228 receives any scene change information SC from the scene-change-detecting unit 121, the display-size-deciding unit 228 then may return the display size of the image to be displayed to its display size before the enlargement or the reduction.

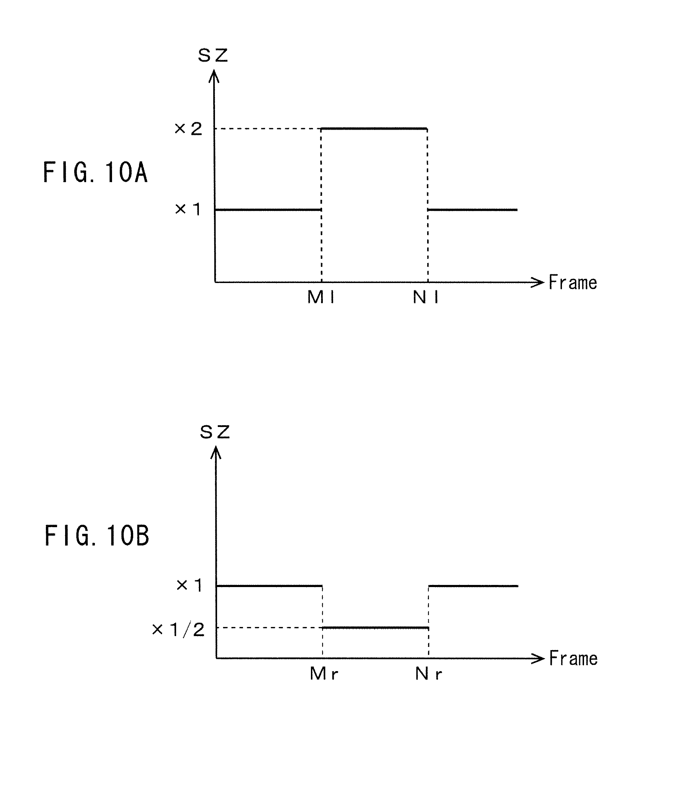

FIGS. 10A and 10B show control examples on a zoom ratio when a display size enlarges and reduces. In FIG. 10A, a vertical axis indicates an amount of the pieces of display size information SZ for each frame and a horizontal axis indicates the frame. In this moment, the motion-vector-extracting circuit 226 extracts the motion vectors relative to the second most histograms as described above and supplies the number of these motion vectors to the display-size-deciding unit 228. It is supposed that at an Mth frame MI shown in FIG. 10A, the number of the motion vectors relative to the second most histograms exceeds the predetermined threshold value while at an Nth frame N1 shown in FIG. 10A, the number of the motion vectors relative to the second most histograms does not exceed the predetermined threshold value.

A frame before the frame MI has the amount X1 of the pieces of display size information SZ that is an amount of the pieces of display size information SZ so that an input image can be displayed as it is because the number of the motion vectors relative to the second most histograms does not exceed the predetermined threshold value. The frame MI has the amount X2 of the pieces of display size information SZ that is an amount of the pieces of display size information SZ so that an input image can be displayed twofold because the number of the motion vectors relative to the second most histograms exceeds the predetermined threshold value. A frame up to the frame NI keeps the amount X2 of the pieces of display size information SZ that is an amount of the pieces of display size information SZ so that an input image can be displayed twofold because the number of the motion vectors relative to the second most histograms exceeds the predetermined threshold value. The frame N1 returns the amount of the pieces of display size information SZ to the amount X1 of the pieces of display size information so that an input image can be displayed as it is because the number of the motion vectors relative to the second most histograms does not exceed the predetermined threshold value.

Although FIG. 10A has shown a case of enlargement of the display size of the image to be displayed, the display size thereof may be reduced. FIG. 10B shows the reduced case of the display size. In FIG. 10B, a vertical axis indicates an amount of the pieces of display size information SZ for each frame and a horizontal axis indicates the frame. In this moment, the motion-vector-extracting circuit 226 extracts the motion vectors relative to the second most histograms as described above and supplies the number of motion vectors to the display-size-deciding unit 228. It is supposed that at an Mth frame Mr shown in FIG. 10B, the number of the motion vectors relative to the second most histograms exceeds the predetermined threshold value while at an Nth frame Nr shown in FIG. 10B, the number of the motion vectors relative to the second most histograms does not exceed the predetermined threshold value.

A frame before the frame Mr has the amount X1 of the pieces of display size information SZ that is an amount of the pieces of display size information SZ so that an input image can be displayed as it is because the number of the motion vectors relative to the second most histograms does not exceed the predetermined threshold value. The frame Mr has the amount X1/2 of the pieces of display size information SZ that is an amount of the pieces of display size information SZ so that an input image can be displayed into halves because the number of the motion vectors relative to the second most histograms exceeds the predetermined threshold value. A frame up to the frame Nr keeps the amount X1/2 of the pieces of display size information SZ that is an amount of the pieces of display size information SZ so that an input image can be displayed into halves because the number of the motion vectors relative to the second most histograms exceeds the predetermined threshold value. The frame Nr returns the amount of the pieces of display size information SZ to the amount X1 of the pieces of display size information SZ so that an input image can be displayed as it is because the number of the motion vectors relative to the second most histograms does not exceed the predetermined threshold value.

Thus, a zoom ratio is controlled to enlarge or reduce the display size of the image to be displayed.

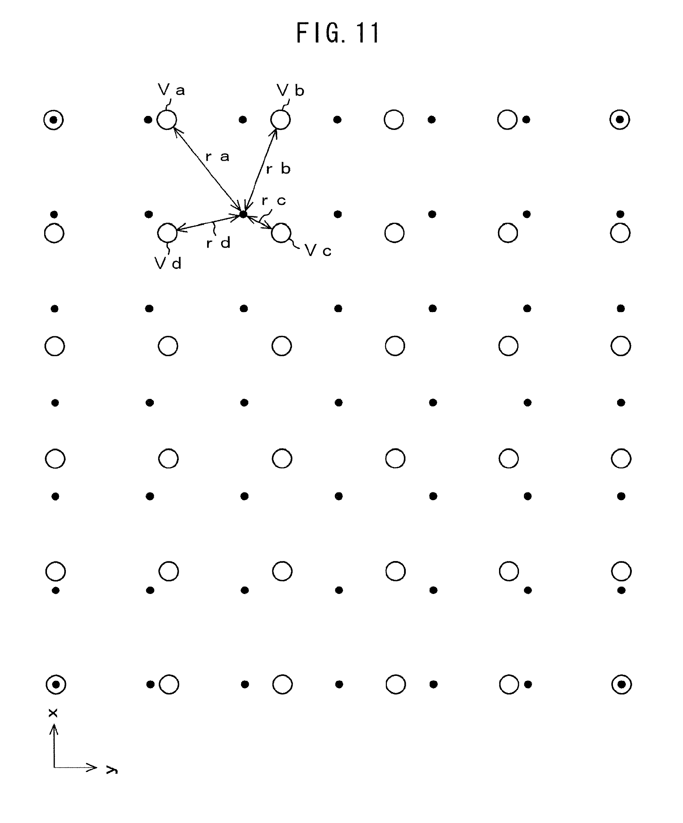

FIG. 11 illustrates a generation example of an enlarged display image. In this example, the input image signal SDin is enlarged by 1.2 folds. White circular marks in FIG. 11 indicate pixels that are arranged in a space direction in the input image signal SDin and black dot marks in FIG. 11 indicate pixels to be generated when enlarging the image. Each pixel indicated by the black dot mark is generated using four pixels indicated by the white circular marks around the black dot mark. A pixel value V of the pixel indicated by the black dot mark may be calculated by following expression (5) :

$$V = \quad \underline{\quad\quad}$$

and each of the pixels indicated by the white circular marks around the black dot mark; and Sr indicates the sum total of the distances between the pixel indicated by the black dot mark and each of the pixels indicated by the white circular marks around the black dot mark.

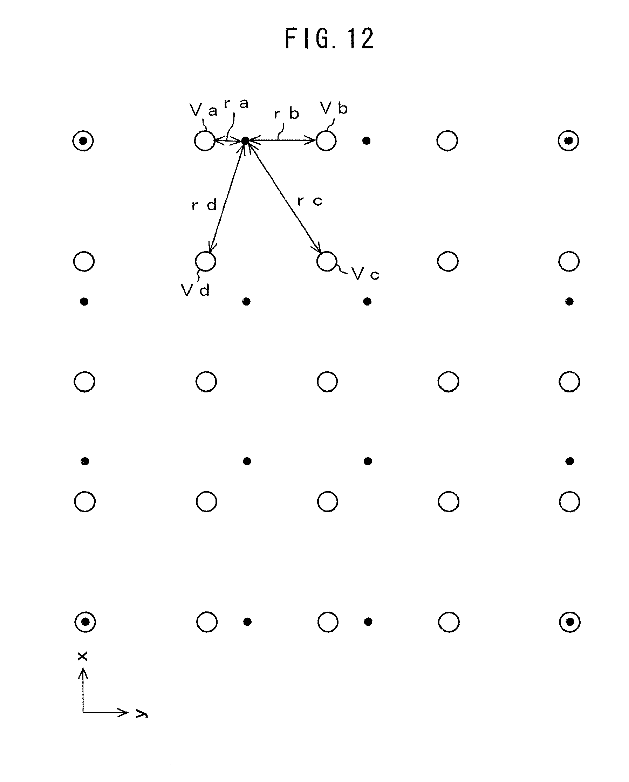

FIG. 12 illustrates a generation example of a reduced display image. In this example, the input image signal SDin is reduced to 0.75 folds. White circular marks in FIG. 12 indicate pixels that are arranged in a space direction in the input image signal SDin and black dot marks in FIG. 12 indicate pixels to be reduced when reducing the image. Each pixel indicated by the black dot mark is generated using four pixels indicated by the white circular marks around the black dot mark. A pixel value V of the pixel indicated by the black dot mark may be calculated by the above expression (5) wherein Va, Vb, Vc, and Vd indicate pixel values of the four pixels indicated by the white circular marks; ra, rb, rc, and rd indicate distances between the pixel indicated by the black dot mark and each of the pixels indicated by the white circular marks around the black dot mark; and Sr indicates the sum total of the distances between the pixel indicated by the black dot mark and each of the pixels indicated by the white circular marks around the black dot mark.

Thus, the display-size-setting unit 126 sets the display size of the image to be displayed based on the display size information SZ with its display size being enlarged or reduced and generates image signals corresponding to the projectors 112L, 112C, and 112R to supply them to signal output units 142L, 142C, and 142R in the apparatus 120 of processing an image.

Operation of enlargement or reduction of the image to be displayed may perform so that an original display size can change to a display size of specified folds for a split second or smoothly. For example, if the input image enlarges by two folds, a zoom ratio gradually changes from 1.0 fold to 2.0 folds through 1.2, 1.4, 1.6, and 1.8 folds in this order utilizing five frames. This realizes a smooth zoom ratio change, thereby making it easy to recognize to a user a change of the display size of the image to be displayed.

Although the expression (5) has been illustrated as the expression for changing the display size of the image to be displayed, how to change the display size of the image to be displayed is not limited to such the expression (5) in this invention. Anything that can enlarge or reduce the display size of the image to be displayed can be utilized.

If the display size of the image to be displayed enlarges so that the enlarged image expands over a size of a screen, the zoo ratio can be limited so as to contain a display size of the expanded image within the size of the screen or the expanded image can be displayed at an optional size without any limitation of the zoom ratio to contain a display size of the expanded image within the size of the screen.

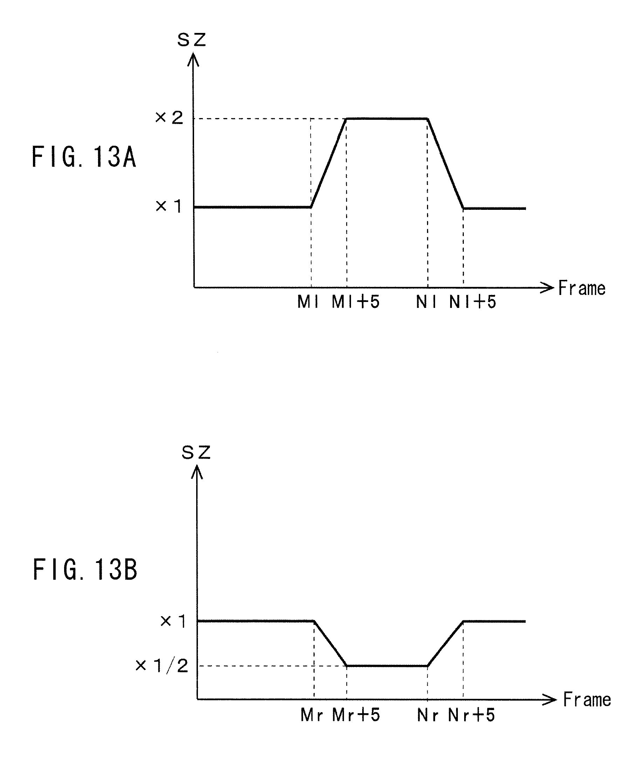

FIGS. 13A and 13B show control examples of a zoom ratio when a display size of the image to be displayed smoothly enlarges and reduces. In FIG. 13A, a vertical axis indicates an amount of the pieces of display size information SZ for each frame and a horizontal axis indicates the frame. In this moment, the motion-vector-extracting circuit 226 shown in FIG. 9 extracts the motion vectors relative to the second most histograms as described above and supplies the number of motion vectors to the display-size-deciding unit 228. It is supposed that at an Mth frame Ml shown in FIG. 13A, the number of the motion vectors relative to the second most histograms exceeds the predetermined threshold value while at an Nth frame Nl shown in FIG. 13A, the number of the motion vectors relative to the second most histograms does not exceed the predetermined threshold value.

A frame before the frame Ml has the amount X1 of the pieces of display size information SZ that is an amount of the pieces of display size information SZ so that an input image can be displayed as it is because the number of the motion vectors relative to the second most histograms does not exceed the predetermined threshold value. The display-size-deciding unit 228 generates the display size information SZ to display the input image as it is.

The display-size-deciding unit 228 consecutively changes zoom ratios of the display size of the image to be displayed on frames within a range from the frame Ml to a set frame thereafter because the number of the motion vectors relative to the second most histograms exceeds the predetermined threshold value.

In this embodiment, the display-size-deciding unit 228 generates the display size information SZ such that enlargement ratios of the display size of the image to be displayed on frames within a range from the frame Ml to a fifth frame M1+5 after the frame Ml are consecutively changed to reach at the frame Ml+5 the amount X2 of the pieces of display size information SZ that is an amount of the pieces of display size information SZ so that an input image can be displayed twofold. For example, the frame Ml is set to have a reference size (1.0) and the enlargement ratios gradually change utilizing five frames from the reference size (1.0) to two folds (2.0) through 1.2, 1. 4, 1.6, and 1.8 folds. This enables the enlargement ratio to change smoothly and a user to feel the change in the display size of the image without any uncomfortable feeling.

A frame up to the frame Nl then keeps the amount X2 of the pieces of display size information SZ that is an amount of the pieces of display size information SZ so that an input image can be displayed twofold because the number of the motion vectors relative to the second most histograms exceeds the predetermined threshold value.

Because the number of the motion vectors relative to the second most histograms does not exceed the predetermined threshold value, the display-size-deciding unit 228 then generates the display size information SZ such that reduction ratios of the display size of the image to be displayed on frames within the range from the frame N to a fifth frame Nl+5 after the frame Nl are consecutively changed to reach at the frame N1+5 the amount X1 of the pieces of display size information SZ that is an amount of the pieces of display size information SZ so that an input image can be displayed as it is. For example, the frame Nl is set to have a reference size (2.0) and the reduction ratios gradually change utilizing five frames from the reference size (2.0) to one fold (1.0) through 1.8, 1.6, 1.4, and 1.2 folds.

If the motion-vector-extracting circuit 226 extracts an amount of change of the motion vectors in a major object in addition with the number of motion vectors thereof, the display-size-deciding unit 228 sets the change of enlargement ratio to a sharp one when the amount of change of the motion vectors is large or to a gentle one when the amount of change of the motion vectors is small. This enables the image to be displayed according to any various kinds of display methods based on a feature value in the image because the enlargement ratio changes based on the amount of change of the motion vectors even if the same enlargement ratio is attained.

Although FIG. 13A has shown a case of enlargement of the display size of the image to be displayed, the display size thereof may be reduced. FIG. 13B shows the reduced case of the display size. In FIG. 13B, a vertical axis indicates an amount of the pieces of display size information SZ for each frame and a horizontal axis indicates the frame. In this moment, the motion-vector-extracting circuit 226 extracts the motion vectors relative to the second most histograms as described above and supplies the number of motion vectors to the display-size-deciding unit 228. It is supposed that at an Mth frame Mr shown in FIG. 13B, the number of the motion vectors relative to the second most histograms exceeds the predetermined threshold value while at an Nth frame Nr shown in FIG. 13B, the number of the motion vectors relative to the second most histograms does not exceed the predetermined threshold value.

A frame before the frame Mr has the amount X1 of the pieces of display size information SZ that is an amount of the pieces of display size information SZ so that an input image can be displayed as it is because the number of the motion vectors relative to the second most histograms does not exceed the predetermined threshold value. Because the number of the motion vectors relative to the second most histograms exceeds the predetermined threshold value at the frame Mr, the reduction ratios of the display size of the image to be displayed on frames within the range from the frame Mr to a fifth frame Mr+5 after the frame Mr are consecutively changed to reach at the frame Mr+5 the amount X1/2 of the pieces of display size information SZ that is an amount of the pieces of display size information SZ so that an input image can be displayed into halves. For example, the frame Mr is set to have a reference size (1.0) and the reduction ratios gradually change utilizing five frames from the reference size (1.0) to the amount X1/2 (0.5) of the pieces of display size information SZ through 0.9, 0.8, 0.7, and 0.6 folds. This enables the reduction ratio to change smoothly and a user to feel the change in the display size of the image without any uncomfortable feeling.

A frame up to the frame Nr then keeps the amount X1/2 of the pieces of display size information SZ that is an amount of the pieces of display size information SZ so that an input image can be displayed into halves because the number of the motion vectors relative to the second most histograms exceeds the predetermined threshold value.

The enlargement ratios of the display size of the image to be displayed on frames within the range from the frame Nr to a fifth frame Nr+5 after the frame Nr are consecutively changed to reach at the frame Nr+5 the amount X1 of the pieces of display size information SZ that is an amount of the pieces of display size information SZ so that an input image can be displayed as it is because the number of the motion vectors relative to the second most histograms does not exceed the predetermined threshold value at the frame Nr. For example, the frame Nr is set to have a reference size (0.5) and the enlargement ratios gradually change utilizing five frames from the reference size (0.5) to the amount X1 (1.0) of the pieces of display size information SZ through 0.6, 0.7, 0.8, and 0.9 folds.

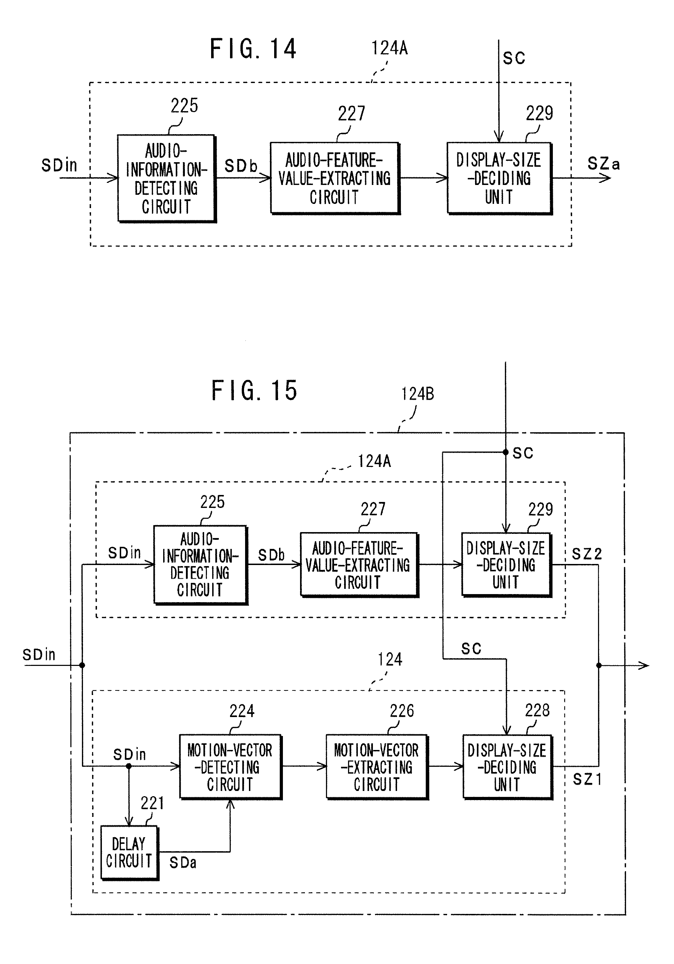

FIG. 14 shows a configuration of a display-size-changing-and-deciding unit 124A. The display-size-changing-and-deciding unit 124A contains an audio-information-detecting circuit 225, an audio-feature-value-extracting circuit 227, and a display-size-deciding unit 229. The audio-information-detecting circuit 225 receives an input image signal SDin and detects an audio signal SDb accompanying with the input image signal SDin. It is to be noted that in order to facilitate the description, the audio signal SDb is supposed to be overlapped with an image signal and relates to two-channel stereo sound. The audio-information-detecting circuit 225 then supplies the detected audio signal SDb to the audio-feature-value-extracting circuit 227.

The audio-feature-value-extracting circuit 227 extracts a desired feature value of the audio from the audio signal SDb by any prescribed method. In this embodiment, the audio signal SDb contains plural audio channels and the audio-feature-value-extracting circuit 227 extracts an amount of sound of each audio channel from the audio signal SDb of a corresponding image and averages or sums the amounts of sounds for each frame of the image. For example, the audio-feature-value-extracting circuit 227 extracts an amount of sound of each of the audio channels, L and R, from the two-channel stereo audio signal SDb for each frame of the image and averages or sums the amounts of sounds thus extracted in image frame units to supply it to the display-size-deciding unit 229.

The display-size-deciding unit 229 decides a display size of the image relative to the input image signal SDin based on the audio feature value(s) extracted by the audio-feature-value-extracting circuit 227. For example, the display-size-deciding unit 229 compares the averaged or summed amount of sound with a predetermined threshold value and decides that the scene has a large amount of sound if the averaged or summed amount of sound exceeds the threshold value. If so, the display-size-deciding unit 229 generates display size information SZa to enlarge the display size of the image to be displayed. The display-size-deciding unit 229 also compares the averaged or summed amount of sound with another predetermined threshold value and decides that the scene has a small amount of sound if the averaged or summed amount of sound does not exceed the above-mentioned another threshold value. If so, the display-size-deciding unit 229 generates the display size information SZa to reduce the display size of the image to be displayed.

For example, in order to change the display size of the image of first frame to be displayed, the display-size-deciding unit 229 generates the display size information SZa to consecutively change an enlargement or reduction ratio of the display size of the image from the first frame to a second frame, which appears after the first frame by a predetermined period of time, to be displayed. The display-size-deciding unit 229 supplies the display size information SZa to the display-size-setting unit 126 shown in FIG. 3.

The display-size-setting unit 126 receives the display size information SZa from the display-size-deciding unit 229 and sets the display size of the image to be displayed based on the display size information SZa. This enables the image to be displayed with its display size being enlarged or reduced based on feature value(s) of the audio in a video, thereby allowing the video having any reality and/or impact thereon to be presented.

The operations of the audio-feature-value-extracting circuit 227 are not limited to the above operations in this invention and the audio-feature-value-extracting circuit 227 can perform various kinds of the operations together with the above operations at the same time. In this embodiment, the audio-feature-value-extracting circuit 227 can convert the audio signal SDb to any frequency. The display-size-deciding unit 229 can then decide that the frequency converted by the audio-feature-value-extracting circuit 227 belongs to a set reference frequency range and generate the display size information SZa to enlarge the display size of the image to be displayed based on a result of the decision.

Further, the display size of the image to be displayed may be changed based on difference between amounts of sound of right and left audio channels. In this case, the audio-feature-value-extracting circuit 227 calculates an absolute value of the differences between amounts of sound in the audio channels at the same time. For example, the audio-feature-value-extracting circuit 227 calculates an absolute value of the differences between amounts of sound in the right and left audio channels of the two-channel stereo audio at the same time. The display-size-deciding unit 229 compares the absolute value of the differences with a predetermined threshold value and generates the display size information SZa to enlarge the display size of the image to be displayed if the absolute value of the differences exceeds a predetermined threshold value.

Additionally, the display size of the image to be displayed may be changed based on any change of an amount of sound of each of the right and left audio channels when an object (for example, a vehicle) generating any sound in the image to be displayed moves from a middle of the screen to a side thereof. In this case, the audio-feature-value-extracting circuit 227 calculates a first difference between amounts of sound in the audio channels at a first point of time, calculates a second difference between amounts of sound in the audio channels at a second point of time, and calculates an absolute value of the first and second differences. For example, the audio-feature-value-extracting circuit 227 calculates a difference Dt0 between amounts of sound in the right and left audio channels of the two-channel stereo audio at the same time (for example, an amount of sound for the left audio channel minus an amount of sound for the right audio channel), calculates a difference Dt1 between amounts of sound in the right and left audio channels of the two-channel stereo audio at a next point of time, and calculates an absolute value, $|Dt0-Dt1|$, of the differences, Dt0 and Dt1. The display-size-deciding unit 229 compares the absolute value of the differences with a predetermined threshold value and generates the display size information SZa to enlarge the display size of the image to be displayed if the absolute value of the differences exceeds the predetermined threshold value.

Thus, by changing the display size of the image to be displayed based on the difference between amounts of sound in right and left audio channels and the change of an amount of sound in the right and left audio channels, it is possible to change the display size of the image to be displayed even in a scene in which there are any difference between amounts of sound in right and left audio channels and/or any change of an amount of sound in the right and left audio channels. This enables a scene increasing any impact accompanying with any audio to be presented.

Further, the display-size-deciding unit 229 can generate the display size information SZa to return the display size to a display size before the enlargement or reduction of the display size of the image to be displayed if the comparison in the display-size-deciding unit 229 with the predetermined threshold value varies after the enlargement or reduction thereof.

Further, a user can set information on the audio to be extracted in the audio-feature-value-extracting circuit 227 and operations of the display-size-deciding unit 229 in advance. In such a case, processing may be performed according to the information on the audio and the operations that the user has set. For example, if the user sets so that a scene in which there is any variation in an amount of sound can be enlarged and displayed, the audio-feature-value-extracting circuit 227 calculates an absolute value of differences between an amount of sound of the input frame and that of one frame just before the input frame. The display-size-deciding unit 229 then compares the absolute value of differences with a threshold value. If the absolute value of differences between the amounts of sound exceeds the threshold value, the display-size-deciding unit 229 decides that an amount of sound varies in a scene and decides enlargement of the display size of the image to be displayed to generate the display size information SZa.

It is to be noted that the frame from which the audio is detected is not limited to the input frame in the invention. The some frames in front of and behind the input frame may be used therefor. The audio signal may contain any optional channels. This invention is also applicable to a 5.1-channel surround audio signal.

Thus, although the display-size-changing-and-deciding units 124, 124A have been described as the ones utilizing an image and an audio, respectively, they can be combined. For example, FIG. 15 shows a configuration of a display-size-changing-and-deciding unit 124B in which the display-size-changing-and-deciding units 124, 124A shown in FIGS. 7 and 14 are combined in order to display an image with its display size being enlarged or reduced based on both of a motion vector of the object in a video and a feature value of the audio in the video.

The display-size-changing-and-deciding unit 124 detects a motion vector of an object in the image based on image information of the input image signal SDin and decides a display size of an image to be displayed based on the motion vector. In this case, the delay circuit 221 receives the input image signal SDin and delays the nput image signal SDin by one frame to generate an image signal SDa. The motion-vector-detecting circuit 224 receives the input image signal SDin and the delayed image signal SDa. The motion-vector-detecting circuit 224 then detects motion vectors from the input image signal SDin and the delayed image signal SDa. The motion-vector-detecting circuit 224 then supplies the detected motion vectors to the motion-vector-extracting circuit 226.

The motion-vector-extracting circuit 226 extracts predetermined motion vectors from the motion vectors received from the motion-vector-detecting circuit 224. For example, the motion-vector-extracting circuit 226 extracts the motion vectors relative to the second most histograms, and supplies number of the motion vectors relative to the second most histograms to the display-size-deciding unit 228.

The display-size-deciding unit 228 decides a display size of an image based on the motion vector extracted from the motion-vector-extracting circuit 226. For example, if the motion-vector-extracting circuit 226 extracts the motion vectors relative to the second most histograms, the display-size-deciding unit 228 compares number of the motion vectors relative to the second most histograms with a predetermined threshold value. If the number of the motion vectors relative to the second most histograms exceeds the predetermined threshold value, the display-size-deciding unit 228 decides that a major object having a certain extent occupied space moves and decides enlargement of the display size to generate display size information SZ1. If the number of the motion vectors relative to the second most histograms does not exceed the predetermined threshold value, the display-size-deciding unit 228 decides maintenance of the display size to generate display the size information SZ1.

The display-size-changing-and-deciding unit 124A extracts a feature value of the predetermined audio based on audio information in the input image signal SDin and decides a display size of an image based on the feature value of the audio. In this embodiment, the audio-information-detecting circuit 225 receives the input image signal SDin and detects an audio signal SDb (for example, two-channel stereo audio signal) from the input image signal SDin. The audio-information-detecting circuit 225 then supplies the detected audio signal SDb to the audio-feature-value-extracting circuit 227.

The audio-feature-value-extracting circuit 227 extracts, for example, an amount of sound from the detected audio signal SDb. In this embodiment, the audio-feature-value-extracting circuit 227 extracts an amount of sound of each of the audio channels, L and R, from the two-channel stereo audio signal SDb and averages or sums the amounts of sounds thus extracted in image frame units to supply it to the display-size-deciding unit 229.

The display-size-deciding unit 229 compares the averaged or summed amount of sound with a predetermined threshold value and decides that the scene has a large amount of sound if the amount of sound thus extracted exceeds the threshold value. The display-size-deciding unit 229 then generates display size information SZ2 to enlarge the display size of the image to be displayed. The display-size-deciding unit 229 also compares the averaged or summed amount of sound with another predetermined threshold value and decides that the scene has a small amount of sound if the amount of sound thus extracted does not exceed the above-mentioned another threshold value. The display-size-deciding unit 229 then generates the display size information SZ2 to reduce the display size of the image to be displayed.

The display-size-setting unit 126 shown in FIG. 3 then sets the display size of the image to be displayed based on the display size information SZ1 relative to the motion vector of the image, which is generated by the display-size-deciding unit 228 and the display size information SZ2 relative to the amount of sound of the audio, which is generated by the display-size-deciding unit 229.

For example, if the display-size-deciding unit 228 decides enlargement of the display size to two folds based on the motion vector of the object in the image under the display size information SZ1 and the display-size-deciding unit 229 decides enlargement of the display side to 1.5 folds based on the amount of sound of the audio under the display size information SZ2, the display-size-setting unit 126 sets the display size of the image to be displayed based on an additional sum, 3.5 folds, of both of the folds or an accumulated value, 3 folds, thereof.

In this case, the display size has been enlarged to two folds based on the motion vector of the object in the image and has also been enlarged to 1.5 folds based on the amount of sound of the audio, thereby enabling the image having any reality and/or impact to be presented. Further, if both of the display sizes based on the motion vector of the object in the image and the amount of sound of the audio are enlarged or reduced, only the larger enlargement ratio or the larger reduction ratio may be used.

If the display-size-deciding units 228 and 229 receive any scene change information SC from the scene-change-detecting unit 121, the display-size-deciding units 228 and 229 return the display size of the image to be displayed to its size before the enlargement or the reduction.

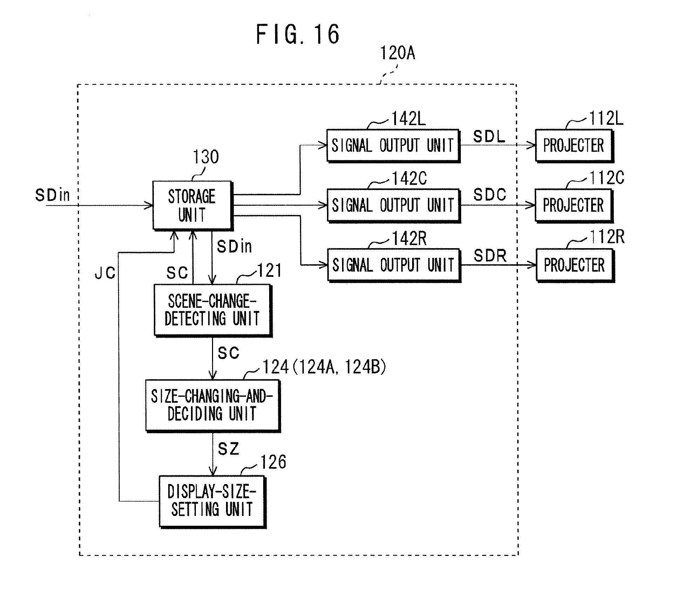

FIG. 16 shows a configuration of an embodiment of the apparatus 120A of processing an image according to the invention when performing processing in an off-line mode. Like reference characters of the apparatus 120 of processing an image as shown in FIG. 3 refer to like elements of the apparatus 120A of processing an image as shown in FIG. 16, detailed explanation of which will be thus omitted.

A storage unit 130 in the apparatus 120A of processing an image receives and stores the input image signal SDin of video. The storage unit 130 also supplies the input image signal SDin to the scene-change-detecting unit 121. Similar to the above real time process, the scene-change-detecting unit 121 generates a scene change detection signal SC when detecting the scene change and supplies the scene change detection signal SC to the display-size-changing- and-deciding unit 124. The display-size-changing-and-deciding unit 124 decides a display size of an image to be displayed for each scene to generate display size information SZ and supply it to the display-size-setting unit 126. The display- size-setting unit 126 sets the display size JC of the image to be displayed relative to the input image signal SDin based on the display size information SZ and supplies the display size JC to the storage unit 130. The storage unit 130 adjusts the display size of the image to be displayed completely based on the received display size JC for each scene and the scene change information SC from the scene-change-detecting unit 121 and supplies image signals relative to the adjusted display size, which correspond to the projectors, to the signal output units 142L, 142C, and 142R.

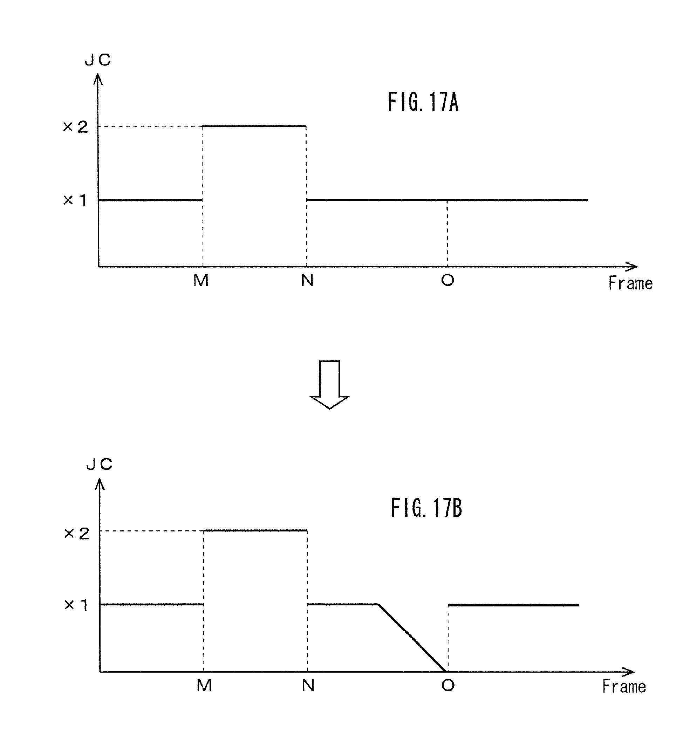

FIGS. 17A and 17B show an adjusted example of the display size JC for each scene supplied to the storage unit 130. In FIGS. 17A and 17B, each of the vertical axes indicates the display size JC for each scene and each of the horizontal axes indicates the frame. In this moment, it is supposed that at an Mth frame M shown in FIGS. 17A and 17B, the display size JC double and then, at an Nth frame N shown in FIGS. 17A and 17B, the display size JC then returns to an original size of one fold, and at an Oth frame O shown in FIGS. 17A and 17B, a scene change occurs.

The storage unit 130 stores frame information relative to frames in which their display sizes JC are gradually reduced coinciding with a timing of the scene change. In this embodiment of performing processing in an off-line mode, each of the display-size-changing-and-deciding unit 124, 124A, or 124B changes the display sizes of the frames so that their display sizes are gradually reduced toward a timing of the scene change detected by the scene-change-detecting unit 121. For example, as shown in FIG. 17B, the display-size-changing-and-deciding unit 124 changes the display sizes of the frames so that their display sizes are gradually reduced in some frames before the frame O, in which the scene change occurs, and returns the display size to a display size before the reduction at the frame O. Such the adjustment enables the display sizes of the frames to be gradually reduced coinciding with a timing of the scene change, thereby allowing the scene change presentation to be easily understood.

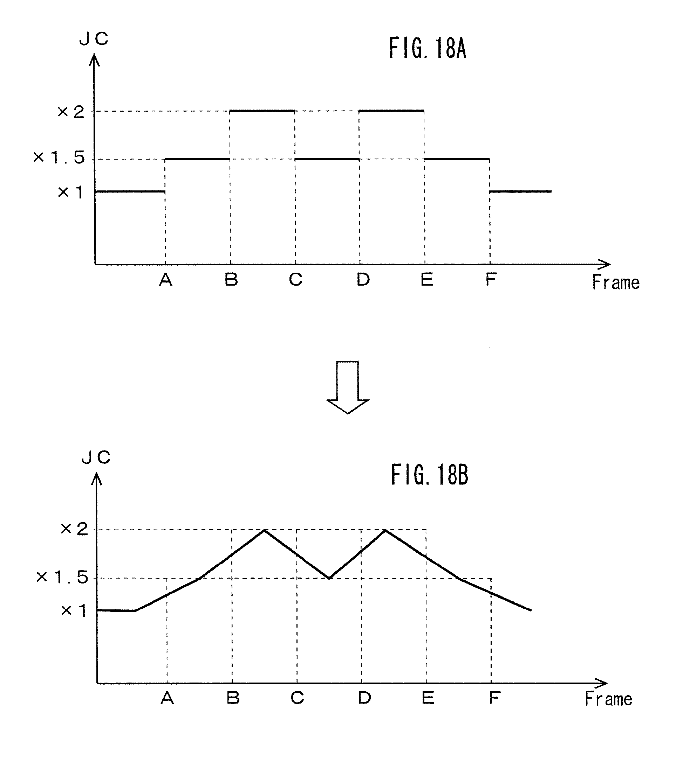

In a case of performing processing in an off-line mode, the display size JC may be smoothly changed in a case where the display size JC is changed frequently in time. FIGS. 18A and 18B show an adjusted example of the display size JC for each frame supplied to the storage unit 130. In FIGS. 18A and 18B, each of the vertical axes indicates the display size JC for each scene and each of the horizontal axes indicates the frame. In this case, it is supposed that at Ath frames A, Bth frame B, Cth frame C, Dth frame D, Eth frame E, and Fth frame F, the display sizes JC change and a period of time within each of the frames is short.

In such a case, the display size frequently changes during a short period of time so that the user can be rather hard to view the image. In this moment, the storage unit 130 stores frame information relative to frames in which their display sizes JC are not changed during the short period of time. In this embodiment of performing processing in an off- line mode, each of the display-size-changing-and-deciding unit 124, 124A, or 124B changes the display sizes of the frames so that their display sizes are gradually changed if in plural frames, their display sizes change and a period of time within each of the frames is short. For example, as shown in FIG. 18B, in a case of, for example, frames A through F, the display-size-changing-and-deciding unit 124 smoothly changes the display sizes of the frames in front of and behind a middle frame of the frames in which their display sizes change (for example, a middle frame of the frames A and B) so that the display size can become a predetermined size at the middle frame. Such the adjustment enables the changes of the zoom ratio occurred during a short period of time to be made a consecutive change, thereby allowing the image to be easily viewed and presented.

Thus, in a case of performing processing in an off-line mode, it is possible to adjust the change of the display size coinciding with the timing of the scene change and the change in time of the display size, thereby enabling the image to be presented according to any readily understandable method and to be easily seen. Even if the display size of the image to be displayed is expanded to exceed a screen size on which the image is displayed, it is possible to display the image on the screen by setting the zoom ratio to an appropriate value therefor without viewing any part of the image at the expansion.

In addition to the above hardware, any software can also implement the above processing. FIG. 19 shows a configuration of an embodiment of a computer 300 to which an embodiment according to the invention is applicable. The computer 300 contains a central processing unit (CPU) 301. To the CPU 301, a read only memory (ROM) 302, a random access memory (RAM) 303, a hard disk drive (HDD) 304, and an input/output interface 305 are connected through a bus 320. To the input/output interface 305, an input unit 311, a record medium drive unit 312, a communication unit 313, an image signal input unit 314, and an image signal output unit 315 are connected.

When external equipment sends any commands to the computer 300 or the input unit 311 constituted of manipulation device such as a keyboard and a mouse or audio input device such as a microphone inputs any commands, these commands are supplied to the CPU 301 through the input/output (I/O) interface 305.

The CPU 301 carries out any programs stored in the ROM 302, the RAM 303, and/or the HDD 304 and performs any processing based on the received commands. The ROM 302, the RAM 303, and/or the HDD 304 previously store any image-processing programs that allow the computer 300 to carry out any processing similar to the above-mentioned apparatus of processing an image. The CPU 301 generates output signals SDL, SDC, and SDR based on the input image signal SDin that the image signal input unit 314 receives using the image-processing programs and transmits the output signals SDL, SDC, and SDR through the image signal output unit 315. The record medium may store such the image-processing programs. The record medium drive unit 312 records the image-processing programs on the record medium or reads the image-processing programs out of the record medium, thereby enabling the computer 300 to carry out the image-processing programs. The communication unit 313 may transmit and receive the image-processing programs through any transmission path, thereby enabling the computer 300 to carry out the received image-processing programs.

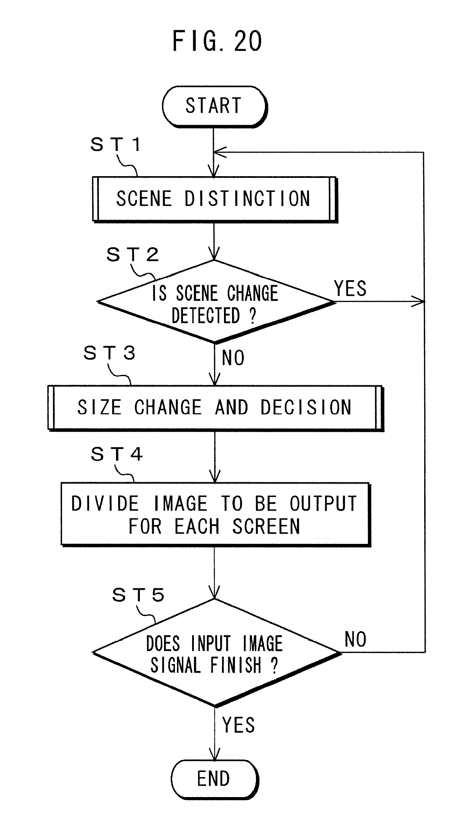

FIG. 20 shows a whole configuration of an image-processing program in a case of real time process. This image-processing program allows the computer 300 to process image and audio signals (the input image signal SDin) relative to an image and an audio of a video.

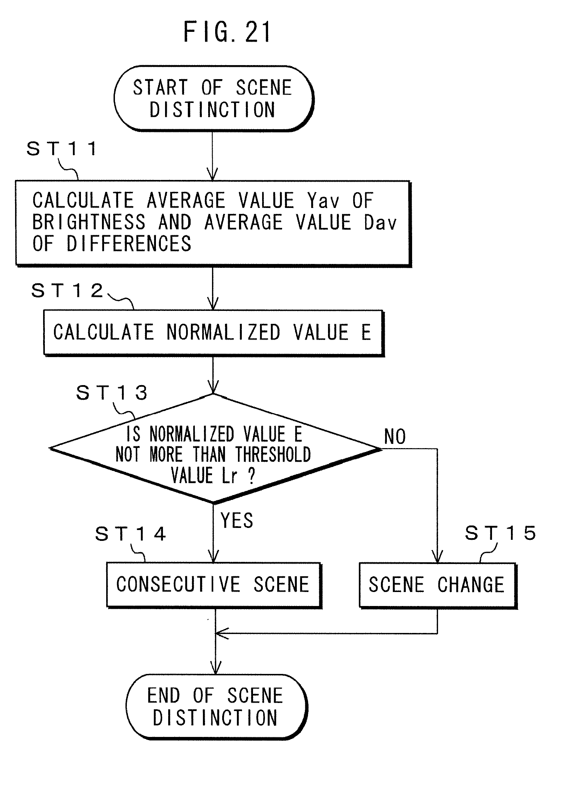

At step ST1 shown in FIG. 20, a scene is distinguished in the input image signal SDin. FIG. 21 shows operation of such the scene distinction. At step ST11 shown in FIG. 21, an average value Dav of differences between the frames in the input image signal SDin and an average value Yav of brightness in each frame are calculated and the process goes to step ST12. At the step ST12, the average value Dav of differences is normalized using the average value Yav of brightness so that the normalized value E can be calculated.

At step ST13, by comparing the normalized value E with a threshold value Lr, it is determined whether or not there is a scene change. If the normalized value E does not exceed the threshold value Lr, the process goes to step ST14 where it is determined that there is no scene change and the image is contained in the same scene. If the normalized value E exceeds the threshold value Lr, the process goes to step ST15 where it is determined that there is a scene change. Thus, the scene distinction is carried out based on the normalized value E.

Alternatively, in the operation of the scene distinction, as described above, the correlation coefficient r may be calculated and the scene change may be detected by comparing the correlation coefficient r with a threshold value. In this case, in place of the steps ST11 and ST12, the correlation coefficient r is calculated according to the above-mentioned expression (4) . In place of the step ST13, by comparing the correlation coefficient r with the threshold value, it is determined whether or not there is a scene change. If the correlation coefficient r is not less than the threshold value, the process goes to step ST14 where it is determined that there is no scene change and the image is contained in the same scene. If the normalized value E is less than the threshold value, the process goes to step ST15 where it is determined that there is a scene change.

Referring back to FIG. 20, at step ST2, it is determined whether or not a scene change is detected. If it is determined that such a scene change is detected, the display size of the image to be displayed is returned to a display size before the enlargement or the reduction and the process goes back to the step ST1. If it is determined that such a scene change is not detected, the process goes to step ST3 where the display size of the image is decided.

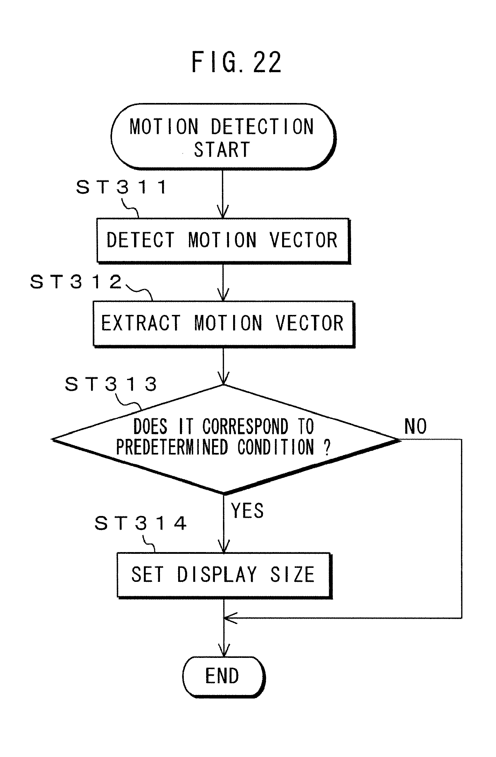

FIG. 22 shows an operation of size change and decision in the step ST3. At step ST311, motion vectors are detected between the input image of a current frame and an image of a frame just before the current frame for each block of 8×8 pixels, for example. At step ST312, any feature value such as number of the motion vectors relative to predetermined histograms or an amount of change of the predetermined motion vectors is extracted from the detected motion vectors. At step ST313, the extracted feature value is compared with a predetermined condition and the display size of the image is decided. If the extracted feature value corresponds with the predetermined condition at the step ST313, the process goes to step ST314. At the step ST314, the display size of the image to be displayed is set. If the extracted feature value does not correspond with the predetermined condition at the step ST313, the display size is returned to a display size that is set previously and the process stops.

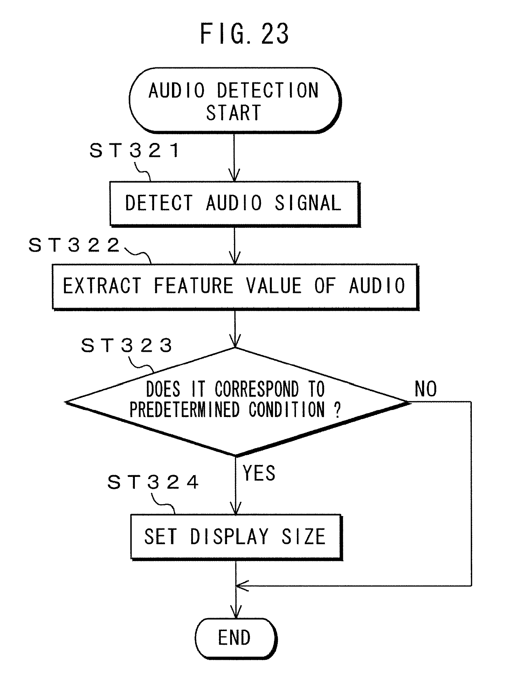

FIG. 23 shows another operation of size change and decision in the step ST3. At step ST321, an audio signal is detected from the input image signal SDin. At step ST322, any feature value such as an amount of sound or a frequency characteristic is extracted from the detected audio signal. At step ST323, the extracted feature value is compared with a predetermined condition and the display size of the image is decided. If the extracted feature value corresponds with the predetermined condition at the step ST323, the process goes to step ST324. At the step ST324, the display size of the image to be displayed is set. If the extracted feature value does not correspond with the predetermined condition at the step ST323, the display size is returned to a display size that is set previously and the process stops.

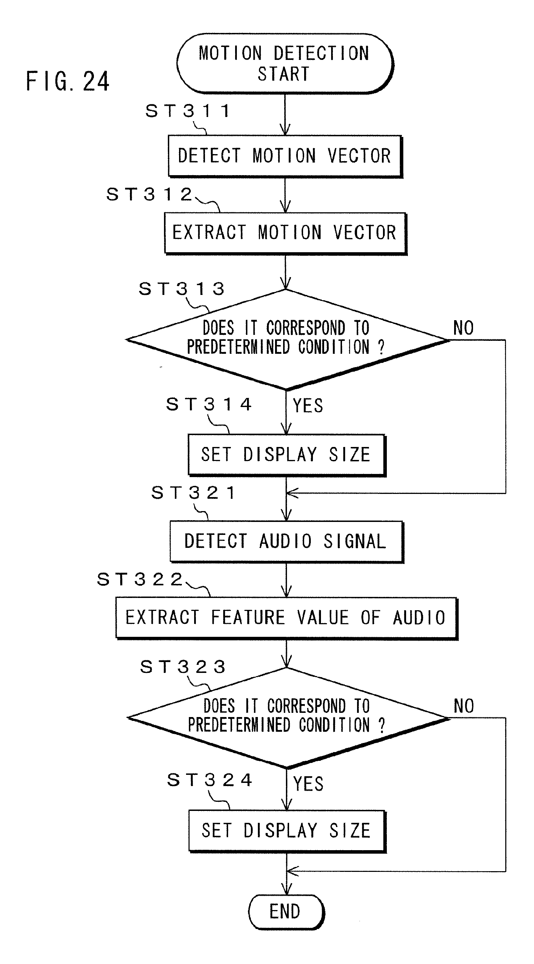

FIG. 24 shows further operation of the size change and decision in the step ST3. The flowchart shown in FIG. 24 is constituted by combining the flowchart based on the motion vector shown in FIG. 22 and the flowchart based on the audio shown in FIG. 23, in which like reference characters shown in FIGS. 22 and 23 refer to like steps shown in FIG. 24.

Namely, at the steps ST311 through ST314, any feature value such as number of the motion vectors relative to predetermined histograms or an amount of change of the predetermined motion vectors is extracted; the extracted feature value is compared with a predetermined condition and the display size of the image is decided; and the display size of the image to be displayed is set. Further, at the steps ST321 through ST324, any feature value such as an amount of sound or a frequency characteristic is extracted from the detected audio signal; the extracted feature value is compared with a predetermined condition and the display size of the image is decided; and the display size of the image to be displayed is set.

Referring back to FIG. 20, at step ST4, the display size of the image to be displayed is changed based on the display size of the image decided at the step ST3 and the output signals SDL, SDC, and SDR are generated. In the generation of the output signals, the image is stored in a frame memory and the image signal is read out of the frame memory so that the read image signal is divided for each screen, thereby enabling the output signals SDL, SDC, and SDR to be generated. Alternatively, the image signal is stored in a memory in which record regions correspond to image display regions, according to their display sizes, and a signal stored in the record region corresponding to each screen is used, thereby enabling the output signals SDL, SDC, and SDR to be generated.

The process then goes to step ST5. At the step ST5, it is determined whether or not the input image signal finishes. If it is determined that the input image signal does not finish, the process goes back to the step ST1. If it is determined that the input image signal finishes, the image processing finishes.

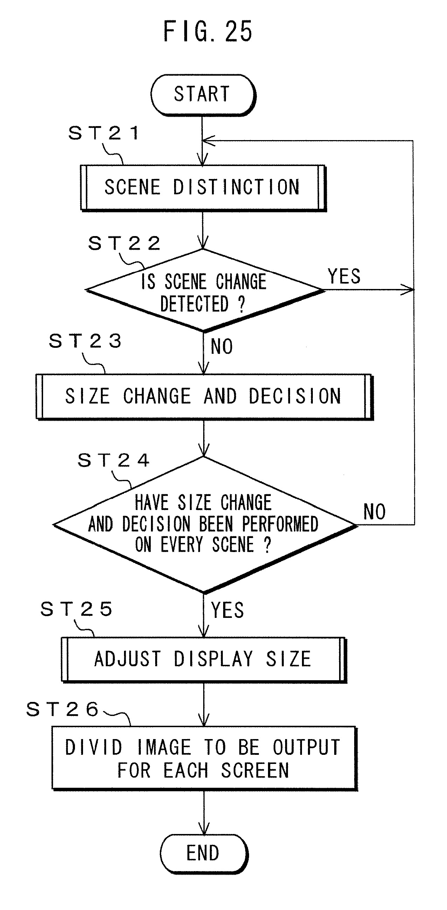

FIG. 25 shows a whole configuration of an image-processing program in a case of performing processing in an off-line mode.

At step ST21, a scene is distinguished in the input image signal SDin. At step ST22, it is determined whether or not a scene change is detected. If it is determined that such a scene change is detected at the step ST22, the process goes back to the step ST21. If it is determined that such a scene change is not detected at the step ST22, the process goes to step ST23 where the display size of the image is decided.

At step 24, it is determined whether or not the size change and decision are performed on every scene. If it is determined that the size change and decision have not yet performed on every scene at the step ST24, the process goes back to the step ST21 to continue the process. If it is determined that the size change and decision are performed on every scene at the step ST24, the process goes to step ST25.

At the step ST25, the display size of the image to be displayed is adjusted based on the display sizes decided on every scene so that the display size of the image to be displayed can change coinciding a timing of scene change or a variation in terms of time on the display size of the image to be displayed can decrease.

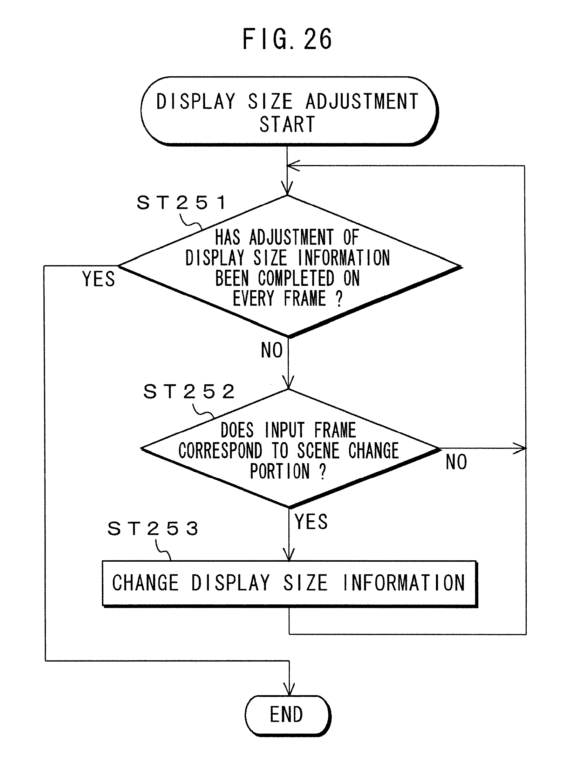

FIG. 26 shows an operation at the step ST25 in a case of changing the display size of the image to be displayed with coinciding a timing of scene change. At step ST251, it is determined whether or not the adjustment of the display size information has been completed on every frame. If it is determined that the adjustment of the display size information has been completed on every frame, the process finishes. If it is determined that the adjustment of the display size information has not yet been completed on every frame, the process goes to step ST252.

At the step ST252, it is determined whether or not the input frame corresponds to a scene change portion. If it is determined that the input frame does not correspond to the scene change portion, the process goes back to the step ST251 to continue the process. If it is determined that the input frame corresponds to the scene change portion, the process goes to step ST253.

At the step ST253, the display size information on the frames from some frame before the frame, in which the scene change occurs, to the frame, in which the scene change occurs, can adjusted so that their display sizes are gradually reduced coinciding the timing of the scene change (see FIG. 17). The process then goes to the step ST251 to continue the process.

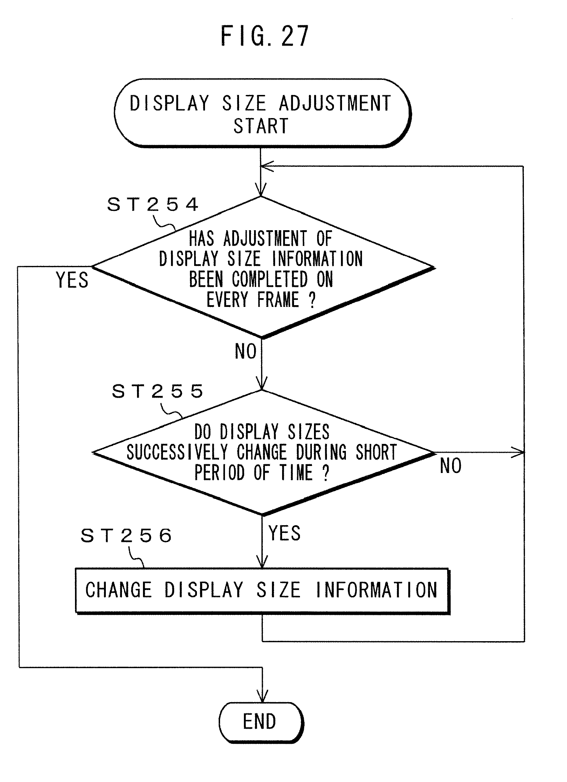

FIG. 27 shows an operation at the step ST25 in a case of adjusting the display size of the image to be displayed so that a variation in terms of time on the display size of the image to be displayed can decrease. At step ST254, it is determined whether or not the adjustment of the display size information has been completed on every frame. If it is determined that the adjustment of the display size information has been completed on every frame, the process finishes. If it is determined that the adjustment of the display size information has not yet been completed on every frame, the process goes to step ST255.

At the step ST255, it is determined whether or not the display sizes successively change during a short period of time in front of and behind the input frame. If it is determined that the display size does not successively change during the short period of time, the process goes back to the step ST254 to continue the process. If it is determined that the display size successively changes during the short period of time, the process goes to step ST256.

At the step ST256, at the frames in which their display sizes successively change during the short period of time, their display sizes are set as to smoothly change the display sizes of the frames in front of and behind the input frame (see FIG. 18). The process then goes back to the step ST254 to continue the process.

Referring back to FIG. 25, at step ST26, the output signals SDL, SDC, and SDR are generated so that the image can be displayed based on the display size adjusted at the step ST25. In the generation of the output signals, the image signal is stored in a frame memory and the image signal is read out of the frame memory so that the read image signal is divided for each screen, thereby enabling the output signals SDL, SDC, and SDR to be generated. Alternatively, the image signal is stored in a memory in which record regions correspond to image display regions, according to their display sizes, and a signal stored in the record region corresponding to each screen is used, thereby enabling the output signals SDL, SDC, and SDR to be generated.

It is to be noted that although the screens and the projectors have been illustrated in the above embodiment, their numbers and size of the screen and the like can be changed optionally. Another kind of display such as a wide screen display or a curved surface display, for example, a cylindrical display, can be used.

If the screen size exceeds the display size of the image to be displayed, the display size of the image to be displayed can change based on the feature values of the image and audio according to the above embodiments, thereby enabling to be presented the image having any more impact and easy to be understandable. Because the screen size exceeds the display size of the image to be displayed, by setting an appropriate zoom ratio, it is possible to display the image with being continuous in the enlarged image.

Although the apparatus 120 of processing an image has contained the storage unit 130 therein in the above embodiment, any external information storage device may be used. If the storage unit 130 can be so configured as to be detachable, even in another image display system having any image display control function, by utilizing the input image signal SDin and information on the display size JC that are stored in this detachable storage unit 130, it is possible to display the image having any reality and easy to be understandable.

According to the above embodiments of the invention, the display size of the image to be displayed may change using an image signal on existing contents without creating new image source and/or another format, thereby enabling to be displayed the image having any more impact than an previous image and easy to be understandable.

Thus, by the apparatus 120 of processing an image, the method of processing an image, and a program product therefor according to the above embodiments of the invention, when processing the input image signal SDin relative to image and audio information on the video, a predetermined motion vector is extracted from the motion vectors on objects in the video, the display size of the image is decided based on the extracted motion vector, and the display size of the image to be displayed is set based on the decided display size. Alternatively, by the apparatus 120 of processing an image, the method of processing an image, and a program product therefor according to the above embodiments of the invention, when processing the input image signal SDin relative to image and audio information, a feature value of the audio is extracted from the input image signal SDin, the display size of the image to be displayed is decided based on the feature value of the audio, and the display size of the image to be displayed is set based on the decided display size. Further, by the apparatus 120 of processing an image, the method of processing an image, and a program product therefor according to the above embodiments of the invention, when processing the input image signal SDin relative to image and audio information on the video, the display size of the image is decided based on the extracted motion vector, the display size of the image to be displayed is decided based on the feature value of the audio, and the display size of the image to be displayed is set based on the decided two display sizes.

Accordingly, according to the embodiments of the invention, it is possible to display the image with its display size being enlarged or reduced based on the motion vector of the object in the image and/or the feature value of the audio on the video. This enables the image having any reality and impact to be presented.

The above-mentioned apparatus 120 of processing an image may be so configured as to be divided into two parts, i.e., an apparatus of generating the display size information SZ and supplying it to an external storage device and an apparatus of reproducing the input image signal SDin based on the display size information SZ stored in the external storage device. For example, FIG. 28 shows a configuration of an embodiment of the apparatus 500 of generating reproduction information according to the invention and FIG. 29 shows a configuration of the apparatus 600 of reproducing information. Like reference characters of the apparatus 120 of processing an image as shown in FIG. 3 refer to like elements of these apparatuses 500 and 600, detailed explanation of which will be thus omitted.

The apparatus 120 of processing an image is divided to configure these apparatuses 500 and 600. The apparatus 500 of generating reproduction information performs any processing on the input image signal SDin on the video and generates the display size information SZ of the video that is an example of reproduction information on the video. The apparatus 500 of generating reproduction information contains a scene-change-detecting unit 121 (121A) and a display-size-changing-and-deciding unit 124 (124A and 124B). The apparatus 600 of reproducing information performs any processing on the input image signal SDin on the video based on the display size information SZ and reproduces the video.

The scene-change-detecting unit 121 in the apparatus 500 of generating reproduction information shown FIG. 28 receives the input image signal SDin, detects a scene change in the video relative to the input image signal SDin to generate the scene-change-detecting signal SC, and supplies the scene-change-detecting signal SC to the display-size-changing-and-deciding unit 124.

When deciding the display size of the image based on the image information in the input image signal SDin, the motion-vector-detecting circuit 224 in the display-size-changing-and-deciding unit 124 shown in FIG. 7 detects motion vectors of the objects in the video from the image information in the input image signal SDin. The motion-vector-extracting circuit 226 receives the detected motion vectors from the motion-vector-detecting circuit 224 and extracts predetermined motion vectors from the received motion vectors. The display-size-deciding unit 228 decides a display size of an image to be displayed based on the motion vector extracted from the motion-vector-extracting circuit 226 and generates the display size information SZ for setting the display size of the image to be displayed to supply it to an output terminal 501. Further, the display-size-deciding unit 228 generates the display size information SZ for returning the display size of the image to be displayed to a display size before the change when the scene-change-detecting unit 121 detects the scene change to supply it to the output terminal 501.

When deciding the display size of the image based on the audio information in the input image signal SDin, the audio-information-detecting circuit 225 in the display-size-changing-and-deciding unit 124A shown in FIG. 14 detects an audio signal SDb from the input image signal SDin. The audio-feature-value-extracting circuit 227 extracts a desired feature value of the audio from the audio signal SDb detected by the audio-information-detecting circuit 225.

The display-size-deciding unit 229 decides a display size of the image relative to the input image signal SDin based on the audio feature value(s) extracted by the audio-feature-value-extracting circuit 227, generates the display size information SZ for setting the display size of the image to be displayed based on the decided display size, and supplies it to the output terminal 501. Further, the display-size-deciding unit 229 generates the display size information SZ for returning the display size of the image to be displayed to a display size before the change when the scene-change-detecting unit 121 detects the scene change to supply it to the output terminal 501.

When deciding the display size of the image based on the image and audio information in the input image signal SDin, the display-size-changing-and-deciding unit 124 in the display-size-changing-and-deciding unit 124B shown in FIG. 15 detects motion vectors of the objects in the video from the image information in the input image signal SDin, decides the display size of the image based on the motion vectors, and generates the display size information SZ1 for setting the display size of the image to be displayed to supply it to the output terminal 501. The display-size-changing-and-deciding unit 124A extracts a desired feature value of the audio from the audio information accompanied with the input image signal SDin, decides a display size of the image relative to the input image signal SDin based on the feature value of the audio, generates the display size information SZ2 for setting the display size of the image to be displayed to supply it to the output terminal 501. Further, the display-size-changing-and-deciding unit 124B generates the display size information SZ for returning the display size of the image to be displayed to a display size before the change when the scene-change-detecting unit 121 detects the scene change to supply it to the output terminal 501.

The output terminal 501 connects an external storage medium, not shown, such as USB memory. This enables to be presented the display size information SZ for display the image with its display size being enlarged or reduced based on the motion vector of the object in the video and a feature value of the audio in the video.

The apparatus 600 of reproducing information shown in FIG. 29 reads the display size information SZ out of the external storage medium and performs any processing on the input image signal SDin on the video based on the display size information SZ to reproduce the video. Of course, the input image signal SDin from which the display size information SZ is generated is identical to the input image signal SDin that is reproduced using the display size information SZ. The apparatus 600 of reproducing information contains a display-size-setting unit 126 and signal output units 142L, 142C, and 142R.

In this embodiment, in the apparatus 600 of reproducing information, an input terminal 601 connects the display-size-setting unit 126 to which the display size information SZ is supplied. The display-size-setting unit 126 also receives the input image signal SDin. The display-size-setting unit 126 then sets the display size of the image to be displayed relative to the input image signal SDin based on the display size information SZ and supplies the output signals SDL, SDC, and SDR corresponding to the projectors 112L, 112C, and 112R to the signal output units 142L, 142C, and 142R, respectively. The signal output units 142L, 142C, and 142R then supply their output signals SDL, SDC, and SDR to the corresponding projectors 112L, 112C, and 112R. The projectors 112L, 112C, and 112R project images to the screens 110L, 110C, and 110R based on the output signals, respectively. This enables the display size of the image to be displayed with being enlarged or reduced while reproducing the image, thereby allowing the video having any reality and impact to be presented.

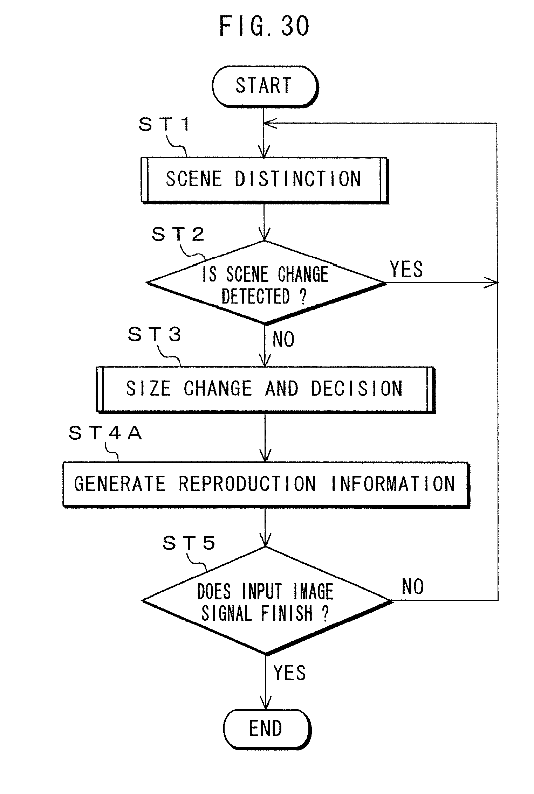

FIG. 30 shows a whole configuration of a reproduction-information-generating program. For example, the reproduction-information-generating program shown in FIG. 30 allows the computer shown in FIG. 20 to generate reproduction information (display size information SZ) for reproducing the input image signal SDin on video. Like reference characters of the image-processing program shown in FIG. 20 refer to like steps in the reproduction-information-generating program shown in FIG. 30, detailed description of which will be omitted.

At step ST1 shown in FIG. 30, a scene is distinguished in the input image signal SDin. Process in the program goes to the steps of the flowchart for showing the operation of scene distinction shown in FIG. 21 as described above and then goes to step ST2.

At the step ST2, it is determined whether or not a scene change is detected. If it is determined that such a scene change is detected, the display size of the image to be displayed is returned to a display size before the enlargement or the reduction and the process goes back to the step ST1. If it is determined that such a scene change is not detected, the process goes to step ST3 where the display size of the image is decided. For example, if the display size of the image is decided based on any image information in the input image signal SDin, the motion vectors of the objects in the video are detected based on the image information and a predetermined motion vector is extracted from the detected motion vectors. The display size of the image is then decided based on the extracted motion vector and the process goes to step ST4A.

If the display size of the image to be displayed is decided based on any audio information in the input image signal SDin, the audio information is detected from the input image signal SDin and a predetermined feature value of the audio is extracted from the detected audio information. The display size of the image relative to the input image signal SDin is then decided based on the extracted feature value of the audio and the process goes to step ST4A.

If the display size of the image is decided based on any image and audio information in the input image signal SDin, the motion vectors of the objects in the video are detected based on the image information, a predetermined motion vector is extracted from the detected motion vectors, and the display size of the image is then decided based on the extracted motion vector. Further, the audio information is detected from the input image signal SDin, a predetermined feature value of the audio is extracted from the detected audio information, and the display size of the image relative to the input image signal SDin is then decided based on the extracted feature value of the audio and the process goes to step ST4A.

At the step ST4A, the display size information for setting the display size of the image to be displayed to the display size thereof decided in the step ST3 is generated and the process goes to step ST5.

At the step ST5, it is determined whether or not the input image signal SDin finishes. If it is determined that the input image signal SDin does not finish, the process goes back to the step ST1. If it is determined that the input image signal finishes, the image processing finishes.

Thus, by the apparatus 500 of generating reproduction information, the method of generating reproduction information, and a program product therefor according to the above embodiments of the invention, when generating the display size information SZ for reproducing the input image signal SDin relative to the audio and image information on the video, a predetermined motion vector is extracted from the motion vectors on the video, the display size of the image to be displayed is decided based on the extracted motion vector, and the display size information SZ for setting the image to be displayed is generated based on the decided display size. Alternatively, by the apparatus 500 of generating reproduction information, the method of generating reproduction information, and a program product therefor according to the above embodiments of the invention, when generating the display size information SZ for reproducing the input image signal SDin relative to the audio and image information on the video, a feature value of the audio is extracted from the input image signal SDin, the display size of the image to be displayed is decided based on the feature value of the audio, and the reproduction information for setting the display size of the image to be displayed based on the decided display size is generated. Further, by the apparatus 500 of generating reproduction information, the method of generating reproduction information, and a program product therefor according to the above embodiments of the invention, when generating the display size information SZ for reproducing the input image signal SDin relative to the audio and image information on the video, the display size of the image to be displayed is decided based on the extracted motion vector and the display size information SZ1 for setting the display size of the image to be displayed based on the decided display size is generated, as well as the display size of the image to be displayed is decided based on the feature value of the audio, and the display size information SZ2 for setting the display size of the image to be displayed based on the decided display size is generated.

Accordingly, according to the embodiments of the invention, it is possible to generate the display size information SZ and the like for display the image with its display size being enlarged or reduced based on the motion vector of the object in the image and/or the feature value of the audio on the video. This enables the image having any reality and impact to be presented by reproducing the corresponding image based on the generated display size information SZ with its display size being enlarged or reduced.

Thus, the apparatus and the method of processing an image and the program product of processing the image as well as the apparatus and the method of generating the reproduction information and the program product of generating the reproduction information according to the above embodiments of the invention are preferably applied to an apparatus and the like that process an input image signal on the video such as a television broadcast program and movie.

It should be understood by those skilled in the art that various modifications, combinations, sub-combinations and alternations may occur depending on design requirements and other coefficients insofar as they are within the scope of the appended claims or the equivalents thereof.

**Claims**

1. An apparatus of processing an image based on an image signal relative to a video, the apparatus comprising:

display-size-changing-and-deciding device that detects a motion vector of an object based on the image signal and decides a display size of the image based on the detected motion vector; and
display-size-setting device that sets the display size of an image to be displayed to the display size decided by the display-size-changing-and-deciding device.

2. The apparatus according to Claim 1 wherein when changing the display size of the image to be displayed, the display-size-changing-and-deciding device consecutively changes a ratio of enlargement or reduction on the display size of the image to be displayed during a period of time from the image to be changed to the image to be displayed.

3. The apparatus according to Claim 1 further comprising scene-change-detecting device that detects a scene change in the video,
wherein when performing processing in an off-line mode, the display-size-changing-and-deciding device changes the display size of the image to be displayed to a smaller-sized image at a timing of the scene change detected by the scene-change-detecting device.

4. The apparatus according to Claim 1 wherein when the display sizes of the plural images to be displayed vary and a period of frame time of each of the images is short in a case of performing processing in an off-line mode, the display-size-changing-and-deciding device gradually changes the display size of each of the images.

5. The apparatus according to Claim 1 wherein the display-size-changing-and-deciding device includes:

   motion-vector-detecting section that detects the motion vectors of the objects in the image signal;
   motion-vector-extracting section that extracts a predetermined vector of the object from the motion vectors of the objects detected by the motion-vector-detecting section; and
   display-size-deciding section that decides the display size of the image to be displayed based on the motion vector extracted by the motion-vector-extracting section,

   wherein the display-size-setting section sets the image to be displayed to the display size decided by the display-size-deciding section.

6. The apparatus according to Claim 5 wherein the motion-vector-extracting section generates histogram of the motion vectors, defines the motion vector having the most frequencies in the histogram of the image as a motion vector of a background, defines the motion vector having the second most frequencies in the histogram of the image as a motion vector of a major object, extracts number of the frequencies of the motion vector having the second most frequencies in the histogram, and supplies the number of frequencies of the motion vector having the second most frequencies in the histogram thus extracted.

7. The apparatus according to Claim 6 wherein the display-size-deciding section compares the number of the frequencies of the motion vector having the second most frequencies in the histogram with a predetermined threshold value, and decides the enlargement of the display size of the image to be displayed if the number of the frequencies of the motion vector having the second most frequencies in the histogram exceeds the predetermined threshold value or maintains the display size of the image to be displayed if the number of the frequencies of the motion vector having the second most frequencies in the histogram does not exceed the predetermined threshold value.

8. A method of processing an image based on an image signal relative to a video, the method comprising:

   a first step of detecting a motion vector of an object based on the image signal;
   a second step of deciding a display size of the image based on the motion vector detected in the first step; and
   a third step of setting the display size of an image to be displayed to the display size decided in the second step.

9. A program product that allows a computer to process an image signal relative to a video by implementing:

   a first step of detecting a motion vector of an object based on the image signal;
   a second step of deciding a display size of the image based on the motion vector detected in the first step; and
   a third step of setting the display size of an image to be displayed to the display size decided in the second step.

10. An apparatus of processing an image based on image and audio signals relative to image and audio information, the apparatus comprising:

audio-information-detecting device that detects the audio information from the image and audio signals;
audio-feature-value-extracting device that extracts a feature value of the predetermined audio from the audio information detected by the audio-information-detecting device;
display-size-deciding device that decides a display size of an image in the image and audio signals based on the feature value of the audio extracted by the audio-feature-value-extracting device; and
display-size-setting device that sets the display size of the image to be displayed to the display size decided by the display-size-deciding device.

11. The apparatus according to Claim 10 wherein when deciding the display size of the image, the display-size-deciding device consecutively changes a ratio of enlargement or reduction on the display size of the image to be displayed during a period of time from a reference image to the image to be displayed.

12. The apparatus according to Claim 10 further comprising scene-change-detecting device that detects a scene change, wherein when performing processing in an off-line mode, the display-size-deciding device changes the display size of the image to a smaller-sized image at a timing of the scene change detected by the scene-change-detecting device.

13. The apparatus according to Claim 10 wherein when display sizes of plural images are changed and a period of frame time of each of the images is short in a case of performing processing in an off-line mode, the display-size-deciding device gradually changes the display size of each of the images.

14. The apparatus according to Claim 10 wherein the display-size-deciding device compares the feature value of the audio extracted by the audio-feature-value-extracting device with a first threshold value and decides the enlargement of the display size of the image to be displayed if the feature value of the audio exceeds the first threshold value; and wherein the display-size-deciding device compares the feature value of the audio extracted by the audio-feature-value-extracting device with a second threshold value and decides the reduction of the display size of the image to be displayed if the feature value of the audio does not exceed the second threshold value.

15. The apparatus according to Claim 10 wherein the audio information includes plural audio channels; and wherein the audio-feature-value-extracting device extracts an amount of sound on each of the audio channels from the audio information and averages the amounts of sound in units of image or sums the amounts of sound.

16. The apparatus according to Claim 10 wherein the audio-feature-value-extracting device changes the audio information to frequency information including a frequency; and wherein the display-size-deciding device determines whether or not the frequency included in the frequency information changed by the audio-feature-value-extracting device belongs to a predetermined reference frequency region, and decides the display size of the image to be displayed on the basis of a result of the determination.

17. The apparatus according to Claim 10 wherein the audio information includes plural audio channels; and wherein the audio-feature-value-extracting device calculates an absolute value of differences on the amounts of sound for each of the audio channels at the same time.

18. The apparatus according to Claim 10 wherein the audio information includes plural audio channels; and wherein the audio-feature-value-extracting device calculates a first difference on the amounts of sound for each of the audio channels at a first time, calculates a second difference on the amounts of sound for each of the audio channels at a second time, and calculates an absolute value of difference between the first difference and the second difference.

19. A method of processing an image based on image and audio signals relative to image and audio information, the method comprising:

a first step of detecting the audio information from the image and audio signals;
a second step of extracting a feature value of the predetermined audio from the audio information detected in the first step;
a third step of deciding a display size of an image in the image and audio signals based on the feature value of the audio extracted in the second step; and
a fourth step of setting the display size of an image to be displayed to the display size decided in the third step.

20. A program product that allows a computer to process image and audio signals relative to image and audio information by implementing:

a first step of detecting the audio information from the image and audio signals;
a second step of extracting a feature value of the predetermined audio from the audio information detected in the first step;
a third step of deciding a display size of an image in the image and audio signals based on the feature value of the audio extracted in the second step; and
a fourth step of setting the display size of an image to be displayed to the display size decided in the third step.

21. An apparatus of processing an image based on image and audio signals relative to image and audio information on a video, the apparatus comprising:

first display-size-changing-and-deciding device that detects a motion vector of an object based on the image information in the image and audio signals and decides a display size of the image based on the motion vector;
second display-size-changing-and-deciding device that extracts a feature value of the predetermined audio from the audio information in the image and audio signals and decides a display size of the image in the image and audio signals based on the feature value of the audio; and
display-size-setting device that sets the display size of the image to be displayed based on the display sizes decided by the first and second display-size-changing-and-deciding devices.

22. The apparatus according to Claim 21 wherein the first display-size-changing-and-deciding device includes:

motion-vector-detecting section that detects the motion vectors of the objects based on the image information in the image and audio signals;
motion-vector-extracting section that extracts a predetermined motion vector from the motion vectors detected by the motion-vector-detecting section; and
first display-size-deciding section that decides the display size of the image to be displayed based on the motion vector extracted by the motion-vector-extracting section,

wherein the second display-size-changing-and-deciding device includes:

audio-information-detecting section that detects the audio information from the image and audio signals;
audio-feature-value-extracting section that extracts a feature value of the predetermined audio from the audio information detected by the audio-information-detecting device;
second display-size-deciding section that decides a display size of the image in the image and audio signals based on the feature value of the audio extracted by the audio-feature-value-extracting device, and

wherein the display-size-setting device sets the display size of the image to be displayed based on the display sizes decided by the first and second display-size-deciding devices.

23. A method of processing an image based on image and audio signals relative to image and audio information on a video, the method comprising:

a first step of detecting a motion vector of on object based on the image information in the image and audio signals;
a second step of decides a display size of the image based on the motion vector detected in the first step;
a third step of extracting a feature value of the predetermined audio from the audio information on the image and audio signals;
a fourth step of deciding a display size of the image in the image and audio signals based on the feature value of the audio extracted in the third step; and
a fifth step of setting the display size of the image to be displayed based on the display sizes decided in the second and forth steps.

24. A program product that allows a computer to process image and audio signals relative to image and audio information on a video by implementing:

a first step of detecting a motion vector of on object based on the image information in the image and audio signals;
a second step of decides a display size of the image based on the motion vector detected in the first step;
a third step of extracting a feature value of the predetermined audio from the audio information on the image and audio signals;

a fourth step of deciding a display size of the image in the image and audio signals based on the feature value of the audio extracted in the third step; and

a fifth step of setting the display size of the image to be displayed based on the display sizes decided in the second and forth steps.

25. An apparatus of generating reproduction information for reproducing an image signal on a video, the apparatus comprising:

motion-vector-detecting device that detects motion vectors of objects from the image signal;

motion-vector-extracting device that extracts a predetermined motion vector from the motion vectors detected by the motion-vector-detecting device; and

display-size-deciding device that decides the display size of the image to be displayed based on the motion vector extracted by the motion-vector-extracting device and generates the reproduction information for setting the display size of the image to be displayed based on the decided display size.

26. The apparatus according to Claim 25 further comprising scene-change-detecting device that detects a scene change in the video,

wherein when the scene-change-detecting device detects the scene change, the display-size-deciding device changes the display size of the image to be displayed back to a display size that is set previously.

27. A method of generating reproduction information for reproducing an image signal on a video, the method comprising:

a first step of detecting motion vectors of objects from the image signal;

a second step of extracting a predetermined motion vector from the motion vectors detected in the first step;

a third step of deciding the display size of the image to be displayed based on the motion vector extracted in the second step; and

a fourth step of generating the reproduction information for setting the display size of the image to be displayed based on the display size decided in the third step.

28. A program product that allows a computer to generate reproduction information for reproducing an image signal on a video by implementing:

a first step of detecting motion vectors of objects from the image signal;

a second step of extracting a predetermined motion vector from the motion vectors detected in the first step;

a third step of deciding the display size of the image to be displayed based on the motion vector extracted in the second step; and

a fourth step of generating the reproduction information for setting the display size of the image to be displayed based on the display size decided in the third step.

29. An apparatus of generating reproduction information for reproducing image and audio signals relative to image and audio information, the apparatus comprising:

audio-information-detecting device that detects the audio information from the image and audio signals;

audio-feature-value-extracting device that extracts a feature value of the predetermined audio from the audio information detected by the audio-information-detecting device; and

display-size-deciding device that decides a display size of the image in the image and audio signals based on the feature value of the audio extracted by the audio-feature-value-extracting device and generates the reproduction information for setting the display size of the image to be displayed.

30. The apparatus according to Claim 29 further comprising scene-change-detecting device that detects a scene change in the image,

wherein when the scene-change-detecting device detects the scene change, the display-size-deciding device changes the display size of the image to be displayed back to a display size that is set previously.

31. A method of generating reproduction information for reproducing image and audio signals relative to image and audio information, the method comprising:

a first step of detecting the audio information from the image and audio signals;

a second step of extracting a feature value of the predetermined audio from the audio information detected in the first step;

a third step of deciding a display size of the image in the image and audio signals based on the feature value of the audio extracted in the second step; and

a fourth step of generating the reproduction information for setting the display size of the image to be displayed based on the display size decided in the third step.

32. A program product that allows a computer to generate reproduction information for reproducing image and audio signals relative to image and audio information by implementing:

a first step of detecting the audio information from the image and audio signals;

a second step of extracting a feature value of the predetermined audio from the audio information detected in the first step;

a third step of deciding a display size of the image in the image and audio signals based on the feature value of the audio extracted in the second step; and

a fourth step of generating the reproduction information for setting the display size of the image to be displayed based on the display size decided in the third step.

33. An apparatus of generating reproduction information for reproducing image and audio signals relative to image and audio information on a video, the apparatus comprising:

first display-size-changing-and-detecting device that detects a motion vector of an object based on the image information in the image and audio signals and decides a display size of the image based on the motion vector, decides the display size of the image based on the motion vector, and generates reproduction information for setting a display size of an image to be displayed; and

second display-size-changing-and-detecting device that extracts a feature value of the predetermined audio from the audio information in the image and audio signals, decides a display size of the image in the image and audio signals based on the feature value of the audio, and generates reproduction information for setting a display size of an image to be displayed.

34. The apparatus according to Claim 33 further comprising scene-change-detecting device that detects a scene change in the video,

wherein when the scene-change-detecting device detects the scene change, the first and second display-size-changing-and-deciding devices change the display size of the image to be displayed back to a display size that is set previously.

35. A method of generating reproduction information for reproducing image and audio signals relative to image and audio information on a video, the method comprising:

a first step of detecting a motion vector of an object based on the image information in the image and audio signals;

a second step of deciding a display size of the image based on the motion vector detected in the first step;

a third step of generating the reproduction information for setting a display size of an image to be displayed to the display size decided in the second step;

a fourth step of extracting a feature value of predetermined audio from the audio information in the image and audio signals;

a fifth step of deciding a display size of an image to be displayed in the image and audio signals based on the feature value of the audio extracted in the fourth step; and

a sixth step of generating the reproduction information for setting a display size of an image to the display size decided in the fifth step.

36. A program product that allows a computer to generate reproduction information for reproducing image and audio signals relative to image and audio information on a video by implementing:

a first step of detecting a motion vector of an object based on the image information in the image and audio signals;

a second step of deciding a display size of the image based on the motion vector detected in the first step;

a third step of generating the reproduction information for setting a display size of an image to be displayed to the display size decided in the second step;

27

a fourth step of extracting a feature value of predetermined audio from the audio information in the image and audio signals;

a fifth step of deciding a display size of an image to be displayed in the image and audio signals based on the feature value of the audio extracted in the fourth step; and

a sixth step of generating the reproduction information for setting a display size of an image to the display size decided in the fifth step.

# FIG. 1

FIG. 2A

F(1)

10L   10C   10R

FIG. 2B

F(2)

10L   10C   10R

FIG. 2C

F(3)

10L   10C   10R

FIG. 2D

F(4)

10L   10C   10R

# F I G. 3

SDin

121 (121A) SCENE-CHANGE-DETECTING UNIT

SC

124 (124A, 124B) DISPLAY-SIZE-CHANGING-AND-DECIDING UNIT

SZ

126 DISPLAY-SIZE-SETTING UNIT

120

142L SIGNAL OUTPUT UNIT → SDL → 112L PROJECTER

142C SIGNAL OUTPUT UNIT → SDC → 112C PROJECTER

142R SIGNAL OUTPUT UNIT → SDR → 112R PROJECTER

# FIG. 4

# FIG. 5

FIG. 6

121A

216

CORRELATION-
COEFFICIENT-
CALCULATING
CIRCUIT

219

DECISION
CIRCUIT

SDin

r

SC

211

DELAY
CIRCUIT

SDda

FIG. 7

124

SC

224

MOTION-VECTOR
-DETECTING
CIRCUIT

226

MOTION-VECTOR
-EXTRACTING
CIRCUIT

228

DISPLAY-SIZE
-DECIDING
UNIT

SDin

SZ

221

DELAY
CIRCUIT

SDa

# FIG. 8

# FIG. 9

```
                    ┌─────────┐
                    │  START  │
                    └─────────┘
                         │
ST51                     ▼
        ┌────────────────────────────────────┐
        │    DETECT MOTION VECTOR MV          │◄──────┐
        └────────────────────────────────────┘       │
                         │                            │
ST52                     ▼                            │
           ┌──────────────────────────┐              │
           │    GENERATE HISTOGRAM     │              │
           └──────────────────────────┘              │
                         │                            │
ST53                     ▼                            │
              ╱────────────────────╲        NO        │
             ╱   HAVE ALL OF MOTION  ╲─────────────────┘
             ╲  VECTORS BEEN DETECTED?╱
              ╲────────────────────╱
                         │ YES
ST54                     ▼
  ┌───────────────────────────────────────────────────┐
  │ EXTRACT NUMBER OF FREQUENCIES OF MVb HAVING        │
  │ THE SECOND MOST FREQUENCIES IN HISTOGRAM           │
  └───────────────────────────────────────────────────┘
                         │
ST55                     ▼
              ╱────────────────────╲
             ╱     DOES NUMBER OF    ╲       NO
            ╱  FREQUENCIES OF MVb EXCEED╲───────────┐
            ╲    THRESHOLD VALUE ?      ╱           │
             ╲────────────────────────╱            │
                         │ YES                      │
ST56                     ▼                          │
             ┌──────────────────────┐              │
             │   SET DISPLAY SIZE    │              │
             └──────────────────────┘              │
                         │◄────────────────────────┘
                         ▼
                    ┌─────────┐
                    │   END   │
                    └─────────┘
```

35

FIG. 10A

FIG. 10B

# FIG. 11

# FIG. 12

FIG. 13A

SZ

×2

×1

MI  MI+5      NI  NI+5

Frame

FIG. 13B

SZ

×1

×1/2

Mr  Mr+5      Nr  Nr+5

Frame

## FIG. 14

124A

SC

225                 227                 229

SDin → AUDIO-INFORMATION-DETECTING CIRCUIT → SDb → AUDIO-FEATURE-VALUE-EXTRACTING CIRCUIT → DISPLAY-SIZE-DECIDING UNIT → SZa

## FIG. 15

124B

SC

124A

225                 227                 229

SDin → AUDIO-INFORMATION-DETECTING CIRCUIT → SDb → AUDIO-FEATURE-VALUE-EXTRACTING CIRCUIT → DISPLAY-SIZE-DECIDING UNIT → SZ2

SDin

SC

124

224                 226                 228

SDin → MOTION-VECTOR-DETECTING CIRCUIT → MOTION-VECTOR-EXTRACTING CIRCUIT → DISPLAY-SIZE-DECIDING UNIT → SZ1

221

DELAY CIRCUIT → SDa

40

# FIG. 16

FIG. 17A

FIG. 17B

FIG. 18A

FIG. 18B

# FIG. 19

301 CPU

302 ROM

303 RAM

304 HDD

305 I/O INTERFACE

320

314 IMAGE SIGNAL INPUT UNIT

SDin →

315 IMAGE SIGNAL OUTPUT UNIT

SDL
SDC
SDR

311 INPUT UNIT

313 COMMUNICATION UNIT

312 RECORD MEDIUM DRIVE UNIT

300

# FIG. 20

START

ST1

SCENE DISTINCTION

ST2

IS SCENE CHANGE
DETECTED ?    YES

NO

ST3

SIZE CHANGE AND DECISION

ST4

DIVIDE IMAGE TO BE OUTPUT
FOR EACH SCREEN

ST5

DOES INPUT IMAGE
SIGNAL FINISH ?    NO

YES

END

# FIG. 21

START OF SCENE
DISTINCTION

ST11

CALCULATE AVERAGE VALUE Yav OF
BRIGHTNESS AND AVERAGE VALUE Dav
OF DIFFERENCES

ST12

CALCULATE NORMALIZED VALUE E

ST13

IS NORMALIZED VALUE E
NOT MORE THAN THRESHOLD
VALUE Lr ?

NO

YES

ST14

CONSECUTIVE SCENE

ST15

SCENE CHANGE

END OF SCENE
DISTINCTION

# FIG. 22

MOTION DETECTION
START

ST311

DETECT MOTION VECTOR

ST312

EXTRACT MOTION VECTOR

ST313

DOES IT CORRESPOND TO
PREDETERMINED CONDITION ?    NO

YES

ST314

SET DISPLAY SIZE

END

# F I G. 23

```
        ┌─────────────────────┐
        │   AUDIO DETECTION    │
        │       START          │
        └──────────┬──────────┘
                   │
ST321              ▼
        ┌─────────────────────┐
        │ DETECT AUDIO SIGNAL  │
        └──────────┬──────────┘
                   │
ST322              ▼
     ┌──────────────────────────────┐
     │ EXTRACT FEATURE VALUE OF AUDIO│
     └───────────────┬──────────────┘
                     │
ST323                ▼
              ╱──────────────╲
            ╱  DOES IT CORRESPOND TO  ╲   NO
           ╲ PREDETERMINED CONDITION ? ╱──────┐
              ╲──────────────╱               │
                     │ YES                    │
ST324                ▼                        │
        ┌─────────────────────┐               │
        │   SET DISPLAY SIZE   │               │
        └──────────┬──────────┘               │
                   │◄──────────────────────────┘
                   ▼
              ┌─────────┐
              │   END   │
              └─────────┘
```

FIG. 24

```
        ┌─────────────────────┐
        │  MOTION DETECTION   │
        │       START         │
        └─────────────────────┘
                   │
ST311              ▼
        ┌─────────────────────┐
        │ DETECT MOTION VECTOR│
        └─────────────────────┘
                   │
ST312              ▼
        ┌─────────────────────┐
        │ EXTRACT MOTION VECTOR│
        └─────────────────────┘
                   │
ST313              ▼
         ╱───────────────────╲          NO
        ⟨ DOES IT CORRESPOND TO ⟩──────────┐
         ╲ PREDETERMINED CONDITION? ╱       │
              │                             │
ST314         │ YES                         │
              ▼                             │
        ┌─────────────────────┐            │
        │  SET DISPLAY SIZE   │            │
        └─────────────────────┘            │
                   │                        │
ST321              ▼◄───────────────────────┘
        ┌─────────────────────┐
        │ DETECT AUDIO SIGNAL │
        └─────────────────────┘
                   │
ST322              ▼
        ┌──────────────────────────┐
        │ EXTRACT FEATURE VALUE OF AUDIO│
        └──────────────────────────┘
                   │
ST323              ▼
         ╱───────────────────╲          NO
        ⟨ DOES IT CORRESPOND TO ⟩──────────┐
         ╲ PREDETERMINED CONDITION? ╱       │
              │                             │
ST324         │ YES                         │
              ▼                             │
        ┌─────────────────────┐            │
        │  SET DISPLAY SIZE   │            │
        └─────────────────────┘            │
                   │                        │
                   ▼◄───────────────────────┘
              ┌─────────┐
              │   END   │
              └─────────┘
```

# FIG. 25

```
                    ( START )
                        │
  ST21                  ▼
         ┌──────────────────────────┐
         │    SCENE DISTINCTION      │
         └──────────────────────────┘
                        │
  ST22                  ▼
              ╱─────────────────╲              YES
             ╱   IS SCENE CHANGE  ╲ ───────────────────┐
             ╲    DETECTED ?      ╱                     │
              ╲─────────────────╱                       │
                        │ NO                            │
  ST23                  ▼                               │
         ┌──────────────────────────┐                  │
         │  SIZE CHANGE AND DECISION │                  │
         └──────────────────────────┘                  │
                        │                               │
  ST24                  ▼                               │
              ╱─────────────────────╲          NO       │
             ╱     HAVE SIZE CHANGE   ╲ ────────────────┘
            ╱ AND DECISION BEEN PERFORMED╲
            ╲     ON EVERY SCENE ?      ╱
              ╲─────────────────────╱
                        │ YES
  ST25                  ▼
         ┌──────────────────────────┐
         │    ADJUST DISPLAY SIZE    │
         └──────────────────────────┘
                        │
  ST26                  ▼
         ┌──────────────────────────┐
         │  DIVID IMAGE TO BE OUTPUT │
         │      FOR EACH SCREEN      │
         └──────────────────────────┘
                        │
                        ▼
                    (  END  )
```

# FIG. 26

DISPLAY SIZE ADJUSTMENT START

ST251

HAS ADJUSTMENT OF DISPLAY SIZE INFORMATION BEEN COMPLETED ON EVERY FRAME ?

YES

NO

ST252

DOES INPUT FRAME CORRESPOND TO SCENE CHANGE PORTION ?

NO

YES

ST253

CHANGE DISPLAY SIZE INFORMATION

END

# FIG. 27

```
        ┌─────────────────────────────┐
        │  DISPLAY SIZE ADJUSTMENT     │
        │          START               │
        └─────────────────────────────┘
                      │
                      ▼
ST254
              ╱──────────────────╲
             ╱  HAS ADJUSTMENT OF  ╲
   YES      ╱ DISPLAY SIZE INFORMATION╲
 ◄─────────╱   BEEN COMPLETED ON       ╲
            ╲     EVERY FRAME ?        ╱
             ╲────────────────────────╱
                      │ NO
                      ▼
ST255
              ╱──────────────────────╲
             ╱   DO DISPLAY SIZES      ╲    NO
            ╱ SUCCESSIVELY CHANGE DURING SHORT╲─────►
            ╲    PERIOD OF TIME ?      ╱
             ╲──────────────────────╱
                      │ YES
ST256                 ▼
        ┌─────────────────────────────────────┐
        │ CHANGE DISPLAY SIZE INFORMATION      │
        └─────────────────────────────────────┘
                      │
                      ▼
                 ┌─────────┐
                 │   END   │
                 └─────────┘
```

# FIG. 28

SDin → (500)

SCENE-CHANGE-DETECTING UNIT  121 (121A)

SC

DISPLAY-SIZE-CHANGING-AND-DECIDING UNIT  124 (124A, 124B)

SZ (SZ1, SZ2) → 501

# FIG. 29

601 → SZ (600)

SDin → DISPLAY-SIZE-SETTING UNIT  126

SIGNAL OUTPUT UNIT  142L  → SDL → PROJECTER 112L

SIGNAL OUTPUT UNIT  142C  → SDC → PROJECTER 112C

SIGNAL OUTPUT UNIT  142R  → SDR → PROJECTER 112R

# FIG. 30

START

ST1 SCENE DISTINCTION

ST2 IS SCENE CHANGE DETECTED ?　YES

NO

ST3 SIZE CHANGE AND DECISION

ST4A GENERATE REPRODUCTION INFORMATION

ST5 DOES INPUT IMAGE SIGNAL FINISH ?　NO

YES

END

**REFERENCES CITED IN THE DESCRIPTION**

**Patent documents cited in the description**

- JP 2007073325 A
- JP H07107412 B

- JP 2006217118 A